# EUROPÄISCHE PATENTSCHRIFT

(11) **EP 3 033 539 B1**
(45) Veröffentlichungstag und Bekanntmachung des Hinweises auf die Patenterteilung: **31.10.2018**
(21) Anmeldenummer: 14758502.0
(22) Anmeldetag: 14.08.2014
(51) Int. Cl.: F16D 65/097, F16D 55/226

(54) **BREMSBELAG EINER SCHEIBENBREMSE UND EINE SCHEIBENBREMSE**
BRAKE PAD OF A DISK BRAKE, AND DISK BRAKE
GARNITURE DE FREIN À DISQUE ET FREIN À DISQUE

(30) Priorität: 16.08.2013 DE 102013013687
(43) Veröffentlichungstag der Anmeldung: 22.06.2016
(73) Patentinhaber: KNORR-BREMSE Systeme für Nutzfahrzeuge GmbH, 80809 München (DE)
(72) Erfinder: GRAAF, Jutta, 82377 Penzberg (DE); SCHROPP, Josef, 94428 Eichendorf (DE); SCHÖNAUER, Manfred, 80995 München (DE)
(86) Internationale Anmeldenummer: PCT/EP2014/002247
(87) Internationale Veröffentlichungsnummer: WO 2015/022080

(56) Entgegenhaltungen:
- DE-A1-102007 049 980
- DE-A1-102008 019 265
- DE-A1-102009 030 414
- DE-A1-102010 023 143

## Beschreibung

Die vorliegende Erfindung betrifft einen Bremsbelag einer Scheibenbremse nach dem Oberbegriff des Anspruchs 1. Die Erfindung bezieht sich auch auf eine entsprechende Scheibenbremse.

Derartige Bremsbeläge werden in Scheibenbremsen für Fahrzeuge verwendet. Dabei sind die Bremsbeläge in Belagschächten eines Bremsträgers aufgenommen. Ein solcher Belagschacht ist seitlich durch so genannte Bremsträgerhörner begrenzt.

Üblicherweise befinden sich die seitlichen Funktionsflächen der Bremsträgerhörner heutzutage in einer parallel zueinander ausgerichteten Lage. Dies kann dazu führen, dass sich der Bremsbelag bei Rüttelbeanspruchung gegen die beiden Bremsträgerhörner verkantet und somit ein Selbsthemmungseffekt erzielt wird, d.h. der Bremsbelag wird am Aufsteigen aus dem Belagschacht gehindert. Dies führt zu einer Entlastung der Belagniederhalterfedern und schützt die tangentialen Aufstandsflächen der Bremsbeläge und derjenigen in dem Belagschacht des Bremsträgers vor Verschleiß.

Sobald die oben beschriebene parallele Ausrichtung der beiden Bremsträgerhörner verlassen wird, verschwindet der Selbsthemmungseffekt, wodurch ein erhöhter Verschleiß an den beteiligten Bauteilen eintritt.

DE 10 2010 023 143 A1 beschreibt eine Scheibenbremse für ein Nutzfahrzeug sowie einen Bremsbelag für eine Scheibenbremse, welcher mit einer Belaghaltefeder ausgerüstet ist. Zumindest die Belaghaltefeder eines zuspannseitigen Bremsbelags weist an jedem Ende ein elastisch verformbares, zwischen dem zugeordneten Bremsträgerhorn und dem Bremsbelag formschlüssig eingreifendes Sicherungselement auf. Diese Ausführung hat sich an sich bewährt, jedoch wird es als nachteilig angesehen, dass sich bei Montage und insbesondere Demontage der Bremsbeläge ein erhöhter Kraftaufwand als auch zusätzliches Werkzeug ergeben.

DE 10 2009 030414 A1 beschreibt einen Bremsbelag für eine Scheibenbremse, insbesondere für ein Nutzfahrzeug, der eine an einer Belagträgerplatte gehaltene Belaghaltefeder aufweist und so ausgebildet ist, dass zumindest ein in Längserstreckung der Belaghaltefeder in unterschiedlichen Positionen fixierbarer Niederhalter vorgesehen ist, mit dem die Belaghaltefeder unter Veränderung der Biegelänge gegen die Belagträgerplatte drückbar ist.

DE 10 2008 019265 A1 betrifft eine Bremsbelaghalterung einer Scheibenbremse für ein Nutzfahrzeug, wobei beidseitig einer Bremsscheibe zugeordnete Bremsbeläge mittels Belaghaltefedern federbelastet in einem durch gegenüberliegende Bremsträgerhörner begrenzten Belagschacht eines ortsfesten Bremsträgers gehalten sind. Die Bremsbelaghalterung ist so ausgebildet, dass die Belaghaltefedern endseitig am Bremsträger angeschlossen sind.

Es besteht ein ständiger Bedarf nach erhöhter Funktionssicherheit sowie einfacher Montage bei Fertigung und Wartung.

Der Erfindung liegt die Aufgabe zu Grunde, einen verbesserten Bremsbelag zu schaffen.

Eine weitere Aufgabe besteht darin, eine verbesserte Scheibenbremse bereitzustellen.

Die Erfindung löst diese Aufgabe durch den Gegenstand des Anspruchs 1. Die weitere Aufgabe wird durch den Gegenstand des Anspruchs 21 gelöst.

Durch eine Ausgestaltung der Verriegelungseinrichtung mit zwei separaten Teilen, die formschlüssig gekoppelt und relativ zueinander beweglich sind, ist nicht nur eine einfache Montage, sondern auch eine leichte Demontage des Bremsbelags ermöglicht

Ein erfindungsgemäßer Bremsbelag einer Scheibenbremse, umfasst mindestens einen auf einem Belagträger aufgebrachten Reibbelag, und einer an dem Belagträger angeordneten Verriegelungseinrichtung mit einem Federelement und einem Sicherungselement. Das das Federelement und das Sicherungselement der Verriegelungseinrichtung sind als zwei separate Teile miteinander formschlüssig gekoppelt und relativ zueinander verschwenkbar.

Eine erfindungsgemäße Scheibenbremse, insbesondere Schiebesattelscheibenbremse, für ein Fahrzeug, umfasst mindestens einen Bremssattel, einen ortsfest fixierten Bremsträger, der zwei Paar Bremsträgerhörner aufweist, durch die jeweils ein Bremsbelag gehalten wird, sowie mindestens einen Belaghalter. Mindestens ein Bremsbelag ist nach der Erfindung ausgebildet, und mindestens eines der zwei Paar Bremsträgerhörner, mit welchem der mindestens eine erfindungsgemäße Bremsbelag in Kontakt steht, weist eine Ausnehmung auf, welche mit dem Verriegelungsabschnitt der Verriegelungseinrichtung des mindestens einen erfindungsgemäßen Bremsbelags zusammenwirkt.

Ein Abschnitt des Sicherungselementes der Verriegelungseinrichtung wirkt im eingebauten Zustand des Bremsbelags mit der Ausnehmung des zugehörigen Bremsträgerhorns zusammen.

Gemäß der Erfindung ist die Verriegelungseinrichtung aus einer entriegelten Stellung, in welcher ein Verriegelungsabschnitt des Sicherungselementes in einer Ausnehmung des Belagträgers aufgenommen ist, in eine Verriegelungsstellung, in welcher der Verriegelungsabschnitt des Sicherungselementes von dem Belagträger zur Zusammenwirkung mit einer Ausnehmung eines Bremsträgerhorns einer zuzuordnenden Scheibenbremse seitlich hervorsteht, und wieder zurück verstellbar. Auf diese Weise ist eine einfache Montage beim Einsetzen des Bremsbelags möglich, ohne dass ein zusätzlicher Kraftaufwand oder Zusatzwerkzeug notwendig ist.

Weitere vorteilhafte Ausführungen des erfindungsgemäßen Bremsträgers sind den Unteransprüchen zu entnehmen.

In einer weiteren Ausführung weist das Federelement in jedem Endbereich eines Federkörpers jeweils einen sich in Längsrichtung des Federelementes erstreckenden Schlitz auf, und das Sicherungselement weist einen Körper mit einer schlitzartigen Öffnung auf, wobei der Körper an einem Ende mit einem Verriegelungsabschnitt ausgebildet ist und mit einem anderen Ende mit dem Federelement gekoppelt ist. Damit ist eine einfache Herstellung der separaten Teile, z.B. durch Stanz- und Biegevorgänge, möglich.

Es ist vorgesehen, dass das Federelement und das Sicherungselement derart formschlüssig gekoppelt sind, indem der eine Schlitz eines Koppelabschnitts in dem einem Endbereich des Federelementes mit dem anderen Ende des Sicherungselementes in Eingriff steht. Ein einfacher Zusammenbau der Teile wird so erreicht.

In weiterer Ausgestaltung ist vorgesehen, dass das mit dem einen Schlitz des Federelementes in Eingriff stehende andere Ende des Sicherungselementes einen schmalen Verbindungsabschnitt aufweist, der den Körper des Sicherungselementes mit einem Querende verbindet, wobei der schmale Verbindungsabschnitt in dem Schlitz des Koppelabschnitts des Federelementes beweglich aufgenommen ist. Daraus ergibt sich ein weiterer Vorteil eines schnellen Zusammenbaus der Verriegelungseinrichtung.

In einer weiteren Ausführung ist vorgesehen, dass die Verriegelungseinrichtung derart auf einer Oberseite des Belagträgers wieder entfernbar angeordnet ist, dass ein Vorsprung des Belagträgers in der schlitzartigen Öffnung des Sicherungselementes angeordnet ist, und dass ein Führungsvorsprung des Belagträgers in dem Schlitz des Koppelabschnitts des Federelementes und ein weiterer Führungsvorsprung des Belagträgers in dem Schlitz des Federelementes angeordnet sind. Auf diese Weise ist eine sehr vorteilhafte Montage, Demontage und Wiederverwendung der Verriegelungseinrichtung möglich.

Eine weitere Ausführung sieht vor, dass die Verriegelungseinrichtung derart auf der Oberseite des Belagträgers wieder entfernbar angeordnet ist, dass in der Verriegelungsstellung der Verriegelungseinrichtung ein dem anderen Schlitz des Federelementes benachbartes Auflagerende des Federelementes auf der Oberseite des Belagträgers aufliegt, wobei der Koppelabschnitt des Federelementes mit seiner Unterseite auf einer Oberseite des Verriegelungselementes aufliegt und das Verriegelungselementes auf die Oberseite des Belagträgers drückt. So wird vorteilhaft erreicht, dass das Verriegelungselement mit dem Federelement einfach und wirkungsvoll gekoppelt ist.

In einer alternativen Ausführung weist das mit dem einen Schlitz des Federelementes in Eingriff stehende andere Ende des Sicherungselementes einen Koppelabschnitt mit einer Koppelöffnung aufweist, wobei ein Abschnitt zwischen dem Körper des Sicherungselementes und dem Koppelabschnitt in dem Schlitz des Koppelabschnitts des Federelementes beweglich aufgenommen ist. Dies ist eine einfache Konstruktion mit einfach herzustellenden Teilen.

In einer weiteren Ausführung umfasst die Verriegelungseinrichtung weiterhin ein Koppelglied, welches mit dem Koppelabschnitt des Sicherungselementes in einer Schwenkachse verschwenkbar verbunden ist, und welches in einer weiteren Schwenkachse mit einem Vorsprung an der Oberseite des Belagträgers verschwenkbar verbunden ist. Dadurch wird eine vorteilhafte Zwangsbewegung des Sicherungselementes um die Schwenkachse herum ermöglicht.

Unter der Oberseite des Belagträgers des Bremsbelags ist die schmale Seite des Belagträgers zu verstehen, welche der unteren Seite gegenüberliegt, die im Belagschacht aufliegt. Der Reibbelag ist auf einer der großflächigen Seiten des Belagträgers aufgebracht.

Dabei weist das Koppelglied mindestens einen Längsabschnitt auf, welcher an seinen Enden mit jeweils einem Koppelabschnitt verbunden ist, wobei ein Koppelabschnitt mit dem Koppelabschnitt des Sicherungselementes verschwenkbar verbunden ist und ein Koppelabschnitt mit dem Vorsprung verschwenkbar verbunden ist. Sol kann das Koppelglied z.B. U-förmig oder als Kettenglied ausgebildet sein.

In einer Ausführung ist die Verriegelungseinrichtung derart auf einer Oberseite des Belagträgers angeordnet, dass ein Vorsprung des Belagträgers in der schlitzartigen Öffnung des Sicherungselementes angeordnet ist, und dass ein Führungsvorsprung des Belagträgers in dem Schlitz des Koppelabschnitts des Federelementes und ein weiterer Führungsvorsprung des Belagträgers in dem Schlitz des Federelementes angeordnet sind, wobei das Koppelglied mit dem Vorsprung des Belagträgers in einer Schwenkachse verschwenkbar verbunden ist. Somit ist die Verriegelungseinrichtung auf der Oberseite des Belagträgers an definierten Punkten fixiert und geführt.

In einer weiteren Ausführung ist die Verriegelungseinrichtung derart auf der Oberseite des Belagträgers angeordnet, dass in der Verriegelungsstellung der Verriegelungseinrichtung ein dem anderen Schlitz des Federelementes benachbartes Auflagerende des Federelementes auf der Oberseite des Belagträgers aufliegt, wobei der Koppelabschnitt des Federelementes zwischen dem ersten Koppelglied und dem Verriegelungselement angeordnet ist und der Koppelabschnitt des Federelementes mit seiner Unterseite auf der Oberseite des Verriegelungselementes aufliegt und das Verriegelungselement auf die Oberseite des Belagträgers drückt. Damit wird vorteilhaft ein einfacher Aufbau erzielt.

In einer noch weiteren Ausführung ist die Verriegelungseinrichtung auf der Oberseite des Belagträgers derart wieder entfernbar angeordnet, dass das Koppelglied U-förmig mit wieder entfernbaren Axialsicherungen ausgebildet ist oder/und dass die Verbindung des Koppelglieds mit dem Vorsprung oder mit dem Koppelabschnitt des Sicherungselementes als Klipsverbindung ausgebildet ist. Dadurch ergibt sich neben dem Vorteil einer einfachen Montage auch eine leichte Demontage und Wiederverwendung der Verriegelungseinrichtung.

In weiterer Ausgestaltung umfasst die Verriegelungseinrichtung weiterhin ein weiteres Koppelglied, welches mit einem mit einer Öffnung ausgebildeten Lagerende des Federelementes verschwenkbar verbunden ist, und welches mit einem Lagervorsprung an der der Oberseite des Belagträgers verschwenkbar verbunden ist. So lässt sich eine definierte Bewegungsmöglichkeit der Verriegelungseinrichtung erreichen.

Dazu kann das weitere Koppelglied mit dem Lagervorsprung verschwenkbar und verschiebbar verbunden sein, z.B. über ein Langloch.

Auch das weitere Koppelglied weist mindestens einen Längsabschnitt auf, welcher an seinen Enden mit jeweils einem Koppelabschnitt verbunden ist, wobei ein Koppelabschnitt mit dem Lagerende des Federelementes verschwenkbar verbunden ist und ein Koppelabschnitt an dem Lagervorsprung angelenkt ist. Natürlich ist auch eine Ausbildung des weiteren Koppelglieds als Kettenglied möglich.

In einer noch weiteren Ausführung ist die Verriegelungseinrichtung derart auf einer Oberseite des Belagträgers angeordnet, dass der Vorsprung des Belagträgers in der schlitzartigen Öffnung des Sicherungselementes angeordnet ist, und ein Führungsvorsprung des Belagträgers in dem Schlitz des Koppelabschnitts des Federelementes und ein Lagervorsprung des Belagträgers in dem Schlitz des Federelementes angeordnet sind, wobei das Koppelglied mit dem Vorsprung des Belagträgers in einer Schwenkachse verschwenkbar verbunden ist, und wobei das weitere Koppelglied an dem Lagervorsprung angelenkt ist.

In einer noch weiteren Ausführung ist vorgesehen, dass die Verriegelungseinrichtung derart auf der Oberseite des Belagträgers angeordnet ist, dass in der Verriegelungsstellung der Verriegelungseinrichtung das Auflagerende des Federelementes auf der Oberseite des Belagträgers aufliegt, wobei der Koppelabschnitt des Federelementes zwischen dem ersten Koppelglied und dem Verriegelungselement angeordnet ist und der Koppelabschnitt des Federelementes mit seiner Unterseite auf der Oberseite des Verriegelungselementes aufliegt und das Verriegelungselement auf die Oberseite des Belagträgers drückt. Dieser vorteilhaft einfache Aufbau ermöglicht eine wirkungsvolle Verriegelung.

In einer Ausführung ist die Verriegelungseinrichtung auf der Oberseite des Belagträgers derart wieder entfernbar angeordnet ist, dass das weitere Koppelglied U-förmig mit wieder entfernbaren Axialsicherungen ausgebildet ist oder/und dass die Verbindung des weiteren Koppelglieds mit dem Lagervorsprung oder mit dem Lagerende des Federelementes als Klipsverbindung ausgebildet ist. Dies ergibt eine vorteilhafte einfache Montage und Demontage sowie eine mögliche Wiederverwendung.

In einer Ausführung der Scheibenbremse ist die Ausnehmung hinterschnittartig ausgebildet. Dadurch wird eine einfache Zusammenwirkung mit der Verriegelungseinrichtung ermöglicht.

In einer weiteren Ausführung steht die Verriegelungseinrichtung des mindestens einen Bremsbelags aus einer entriegelten Stellung, in welcher ein Verriegelungsabschnitt des Sicherungselementes in einer Ausnehmung des Belagträgers aufgenommen ist, in eine Verriegelungsstellung, in welcher der Verriegelungsabschnitt des Sicherungselementes von dem Belagträger zur Zusammenwirkung mit der Ausnehmung des zugehörigen Bremsträgerhorns in Eingriff, wenn der Belaghalter montiert ist. Der Verriegelungsabschnitt des Verriegelungselementes greift in die hinterschnittartige Ausnehmung in der Verriegelungsstellung ein.

In einer Ausführung der Scheibenbremse ist vorgesehen, dass der Belaghalter die Verriegelungseinrichtung des mindestens einen Bremsbelags automatisch aus der entriegelten Stellung in die Verriegelungsstellung verstellt, wenn er montiert wird. Dies ist vorteilhaft einfach und erfordert keine weiteren Änderungen an der Scheibenbremse.

In einer alternativen Ausführung kann mindestens ein separates Betätigungsbauteil zur Verstellung der Verriegelungseinrichtung des mindestens einen Bremsbelags aus der entriegelten Stellung in die Verriegelungsstellung vorgesehen sein. Beispielsweise kann hierzu ein federbelasteter, verdrehbarer Bolzen mit Bajonettverschluss oder auch eine Schraube verwendet werden.

Das Sicherungselement wird im eingebauten Zustand durch eine entsprechende Kontur im Bremsbelagträger gegen tangentiales Verschieben gesichert. Dies ist durch die entsprechenden Vorsprünge ermöglicht.

Das Federelement der Verriegelungseinrichtung sichert das Sicherungselement im eingebauten Zustand des Bremsbelags gegen radiales Verschieben.

Das Sicherungselement stellt außerdem vorteilhaft eine Wegbegrenzung mit definiertem Spiel dar, die im eingebauten Zustand kraftfrei ist, wodurch die Verschiebekraft des Bremssattels nicht erhöht wird.

Das Sicherungselement kann im eingebauten Zustand des Bremsbelags in verriegelter Stellung bei Überlastung gegen die Federkraft des Federelementes abheben und bildet somit vorteilhaft einen integrierten Überlastschutz.

Die zweiteilige Verriegelungseinrichtung mit dem Federelement und dem Sicherungselement vermindert einen Verschleiß im Bereich der hinterschnittartigen Ausnehmung im Bremsträgerhorn und somit ein Spiel zum Bremsträgerhorn im Gegensatz zu einem einteiligen Federverriegelungselement.

Ein weiterer Vorteil besteht darin, dass ein unzulässiger Verschleiß an Bremsbelag und Bremsträger unterbunden bzw. erheblich verringert wird, was zu einer verlängerten Lebensdauer der Bauteile und zu längeren Wartungs- bzw. Tauschintervallen führen kann.

Ausführungsbeispiele eines erfindungsgemäßen Bremsbelags und einer erfindungsgemäßen Scheibenbremse sind in den Zeichnungen dargestellt und werden im Folgenden näher beschrieben, wobei auch weitere Vorteile erfindungsgemäßer Ausführungen erläutert werden. Es zeigen:
- Fig. 1: eine räumliche, schematische Ansicht einer erfindungsgemäßen Scheibenbremse;
- Fig. 2: eine schematische Ansicht eines Bremsträgers mit einem Bremsbelag nach dem Stand der Technik;
- Fig. 3: eine seitliche, schematische Teilansicht eines ersten Ausführungsbeispiels eines erfindungsgemäßen Bremsbelags mit einer Verriegelungseinrichtung in einer verriegelten Stellung;
- Fig. 3a: das Ausführungsbeispiel nach Fig. 3 in einer entriegelten Stellung;
- Fig. 4-4a: perspektivische, schematische Ansichten von Kopplungsabschnitten;
- Fig. 5-5a: seitliche schematische Teilansichten einer Variante des ersten Ausführungsbeispiels nach Fig. 3 und 3a;
- Fig. 6: eine schematische Draufsicht in Richtung VI nach Fig. 3-3a und 5-5a;
- Fig. 7: eine schematische Draufsicht in Richtung VII nach Fig. 3-3a;
- Fig. 7a: eine schematische Seitenansicht eines Teilbereichs nach Fig. 7;
- Fig. 8-8d: verschiedene Varianten von Koppelgliedern in schematischen Draufsichten nach Fig. 6 und 7;
- Fig. 9-9a: seitliche schematische Teilansichten eines zweiten Ausführungsbeispiels des erfindungsgemäßen Bremsbelags;
- Fig. 10: eine schematische Perspektivansicht des zweiten Ausführungsbeispiels des erfindungsgemäßen Bremsbelags nach Fig. 9-9a;
- Fig. 11: eine schematische Perspektivansicht eines Federelementes;
- Fig. 12: eine schematische Perspektivansicht eines Verriegelungselementes; und
- Fig. 13: eine schematische Perspektivansicht der Verriegelungseinrichtung des zweiten Ausführungsbeispiels des erfindungsgemäßen Bremsbelags nach Fig. 9-9a.

Nachfolgend werden Begriffe wie "oben", "unten", "rechts", "links" usw. verwendet, welche sich auf Ausrichtungen in den Figuren beziehen. Koordinaten x, y, z in den Figuren dienen der weiteren Orientierung.

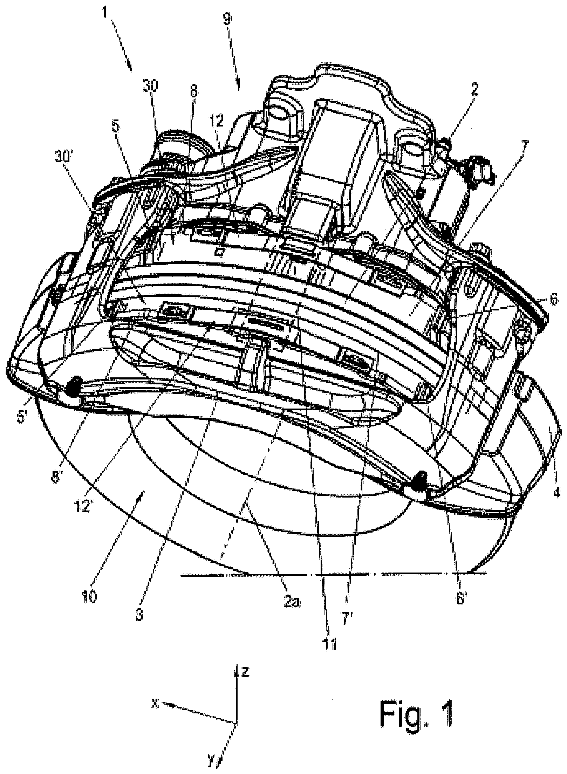

Fig. 1 zeigt eine räumliche, schematische Ansicht einer erfindungsgemäßen Scheibenbremse 1.

Die Scheibenbremse 1 ist z.B. einem Fahrzeug, insbesondere Nutzfahrzeug, zugeordnet und umfasst eine Bremsscheibe 2 mit einer Bremsscheibendrehachse 2a, einen Bremssattel 3, einen Bremsträger 4 und zumindest zwei Bremsbeläge 30, 30', die jeweils einen Reibbelag 7, 7' auf einem Belagträger 8, 8' aufweisen. Die Bremsscheibendrehachse 2a verläuft in y-Richtung.

Der Bremssattel 3 ist hier als Schiebesattel ausgebildet und an dem ortsfest fixierten Bremsträger 4 in nicht näher beschriebener Weise gehalten.

Ein Zuspannabschnitt des Bremssattels 3 nimmt eine Zuspannmechanik der Scheibenbremse 1 auf. Die Zuspannmechanik dient zur Betätigung der Scheibenbremse 1 und kann z.B. ein Bremsdrehhebel mit einem Druckluftzylinder sein. Auf sie wird hier nicht weiter eingegangen.

Die Seite der Scheibenbremse 1, auf welcher der Zuspannabschnitt des Bremssattels 3 mit der Zuspannmechanik angeordnet ist, wird im Weiteren als Zuspannseite 9 bezeichnet. Die andere Seite der Scheibenbremse 1, auf welcher der so genannte Bremssattelrücken vorgesehen ist, wird als Reaktionsseite 10 im Folgenden bezeichnet. Diese Begriffe "Zuspannseite" und "Reaktionsseite" und weitere sich darauf beziehende Bezeichnungen sind üblich und dienen zu einer besseren Orientierung.

So wird der Bremsbelag 30 mit dem Reibbelag 7 und Belagträger 8, der sich auf der Zuspannseite 9 befindet, als zuspannseitiger Bremsbelag 30 bezeichnet, und der diesem gegenüberliegende wird reaktionsseitiger Bremsbelag 30' mit dem Reibbelag 7' und Belagträger 8' genannt.

Der Bremsträger 4 überspannt bzw. umgreift rahmenartig einen in Bezug auf die Bremsscheibendrehachse 2a, axial äußeren Abschnitt der Bremsscheibe 2. Beiderseits der Bremsscheibe 2 ist der Bremsträger 4 mit Bremsträgerhörnern 5, 6 (zuspannseitig) und 5', 6' (reaktionsseitig) versehen, die sich in z-Richtung erstrecken und zur Abstützung der beiden Bremsbeläge 30, 30' dienen.

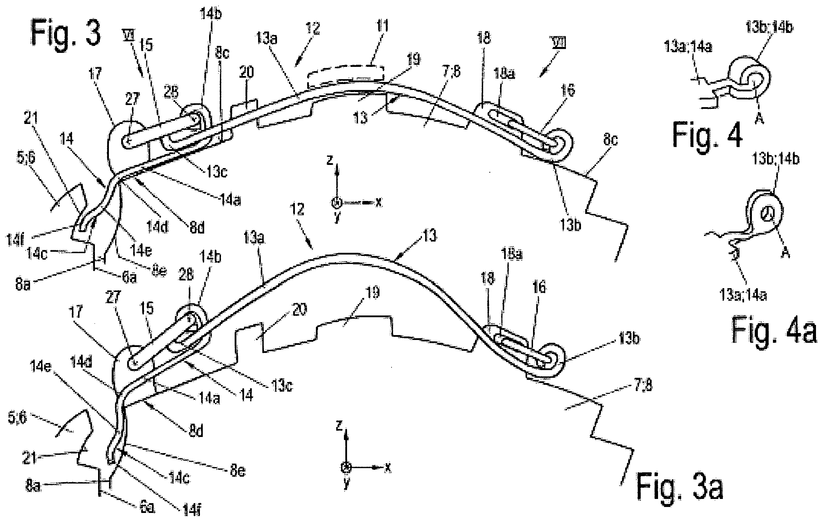

Die Bremsbeläge 30, 30' sind an ihren Oberseiten jeweils mit einer Verriegelungseinrichtung 12, 12' versehen, welche unten noch ausführlich beschrieben wird. Ein nur gestrichelt angedeuteter Belaghalter 11 (siehe auch Fig. 3) ist über den eingebauten Bremsbelägen 30, 30' angeordnet, steht mit den Verriegelungseinrichtungen 12, 12' in Zusammenwirkung, was unten näher erläutert wird, und dient zur Sicherung der Bremsbeläge 30, 30' im Bremsträger 4.

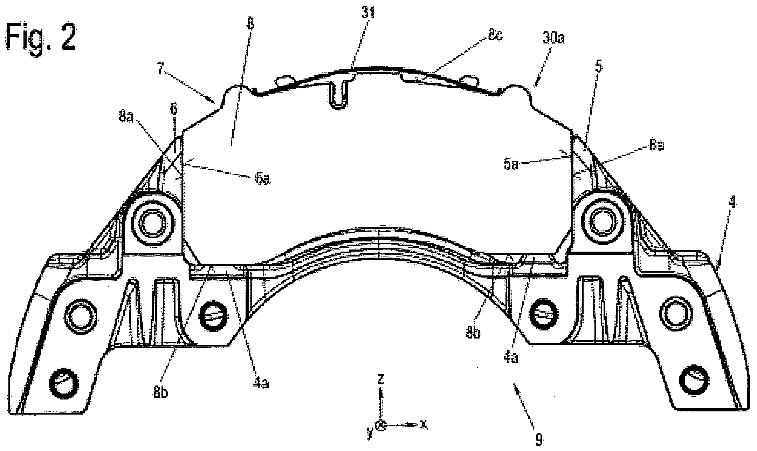

In Fig. 2 ist eine schematische Ansicht eines Bremsträgers 4 mit einem Bremsbelag 30a nach dem Stand der Technik dargestellt.

Der Bremsträger 4 ist von der Zuspannseite 9 her mit den hier sichtbaren Bremsträgerhörnern 5, 6 gezeigt. Innenflächen 5a, 6a der Bremsträgerhörner 5, 6 verlaufen jeweils in einer y-z-Ebene parallel zueinander und bilden jeweils mit unteren Stützabschnitten 4a des Bremsträgers 4 jeweils einen von zwei Bremsbelagschächten aus, die jeweils die Belagträger 8 des Bremsbelags 30a in Umfangsrichtung, d.h. einlaufseitig und auslaufseitig (in Bezug auf die bevorzugte Drehrichtung der Bremsscheibe 2 um die Bremsscheibendrehachse 2a) sowie nach unten hin in negative z-Richtung abstützen. Dabei stehen die Innenflächen 5a, 6a der Bremsträgerhörner 5, 6 mit jeweiligen Seitenflächen 8a des Belagträgers 8 in Kontakt, wobei Auflageabschnitte 8b an der Unterseite des Belagträgers 8 auf den Stützabschnitten 4a des Bremsträgers 4 aufliegen.

An einer Oberseite 8c des Belagträgers 8 ist eine Belagfeder 31 angeordnet, welche in Zusammenwirkung mit dem Belaghalter 11 (siehe Fig. 1 und 3) im eingebauten Zustand des Bremsbelags 30a steht, wobei eine Kraft in negative z-Richtung auf den Bremsbelag 30a einwirkt, die in den Belagschacht gegen die Stützabschnitte 4a des Belagträgers 4 drückt.

Fig. 3 zeigt eine seitliche, schematische Teilansicht eines Ausführungsbeispiels des erfindungsgemäßen Bremsbelags 30, 30' mit der Verriegelungseinrichtung 12 in einer verriegelten Stellung. In Fig. 3a ist das Ausführungsbeispiel nach Fig. 3 in einer entriegelten Stellung dargestellt.

In Fig. 3 und Fig. 3a ist jeweils nur der obere Bereich des Belagträgers 8 des Bremsbelags 30 ohne Reibbelag 7 von der Zuspannseite 9 (siehe Fig. 1 und Koordinatensystem) gezeigt, wobei ein oberer Abschnitt eines der Bremsträgerhörner 5, 6 mit der Innenfläche 6a neben der Seitenfläche 8a des Belagträgers 8 des Bremsbelags 30 dargestellt ist.

Die Beschreibungen für Fig. 3-3a und weitere gelten selbstverständlich auch für den anderen, dabei nicht gezeigten Bremsbelag 30'.

Der Belagträger 8 ist an seiner Oberseite 8c, die in positiver z-Richtung leicht konvex (an den Radius der Bremsscheibe 2 angepasst) ausgebildet ist, links mit einem sich in z-Richtung erstreckenden Vorsprung 17 versehen. Auf der gegenüberliegenden, rechten Seite ist ein weiterer Vorsprung als Lagervorsprung 18 angeformt, der sich ebenfalls in z-Richtung erstreckt. Etwa mittig zwischen diesen Vorsprüngen 17, 18 ist ein Stützvorsprung 19 angeordnet. Zwischen diesem Stützvorsprung 19 und dem Vorsprung 17 ist die Oberseite 8c des Belagträgers 8 mit einem Führungsvorsprung 20 ausgebildet.

An der linken Ecke des Belagträgers 8 geht die Oberseite 8c mit einem leicht konvexen Übergangsabschnitt 8d in eine sich nach unten erstreckende eingeformte konkave Ausnehmung 8e über, an welche sich dann die sich in negativer z-Richtung erstreckende Seitenfläche 8a anschließt. Unter dem Begriff "konkav" im Zusammenhang mit der Ausnehmung 8e ist hier zu verstehen, dass ein Rundungsmittelpunkt der Ausnehmung 8e außerhalb des Belagträgers 8 liegt. Der der Ausnehmung 8e gegenüber angeordnete obere Abschnitt des jeweiligen Belagträgerhorns 5, 6 ist mit einer hinterschnittartigen Ausnehmung 21 versehen. Beide Ausnehmungen 8e und 21 erstrecken sich in y-Richtung; ihre Funktionen werden unten weiter noch näher erläutert.

Die Verriegelungseinrichtung 12 ist auf der Oberseite 8c des Belagträgers 8 des Bremsbelags 30, 30' angeordnet und umfasst ein Federelement 13 und ein Verriegelungselement 14. In diesem ersten Ausführungsbeispiel weist die Verriegelungseinrichtung weiterhin ein erstes Koppelglied 15 und ein zweites Koppelglied 16 auf.

Das Federelement 13 ist mit einem hier nach oben gebogenen, flachen Federkörper 13a ausgebildet. Der Federkörper 13a weist auf der rechten Seite ein Lagerende 13b und an der gegenüberliegenden Seite einen Koppelabschnitt 13c mit einem nach oben umgebogenen, freien Ende auf. Eine Länge dieses umgebogenen Endes entspricht ungefähr der doppelten Dicke des Federkörpers 13a. An das Lagerende 13b ist das zweite Koppelglied 16 verschwenkbar angelenkt. Der Koppelabschnitt 13c des Federelementes 13 ist mit dem Verriegelungselement 14 beweglich gekoppelt.

Das Verriegelungselement 14 umfasst einen in etwa gerade ausgebildeten, flachen Körper 14a, einen Koppelabschnitt 14b und einen Verriegelungsabschnitt 14c. Der Körper 14a ist an seinem rechten Ende, das zu dem Federelement 13 hin weist, mit dem Koppelabschnitt 14b versehen. Das linke Ende des Körpers 14a ist mit dem Verriegelungsabschnitt über einen ersten, konvexen Bogenabschnitt 14d verbunden, der nach unten gebogen ist. An diesen ersten Bogenabschnitt 14d schließt sich ein zweiter, konkaver Bogenabschnitt 14e an, welcher in ein nach unten gebogenes Verriegelungsende 14d übergeht. Die Bogenabschnitte 14d, 14e und das Verriegelungsende 14f des Verriegelungsabschnitts 14c des Verriegelungselementes 14 sind auf diese Weise wellenartig ausgebildet.

Der Koppelabschnitt 14b des Verriegelungselementes 14 ist einerseits mit dem Koppelabschnitt 13c des Federelementes 13 und andererseits mit dem ersten Koppelglied 15 gekoppelt.

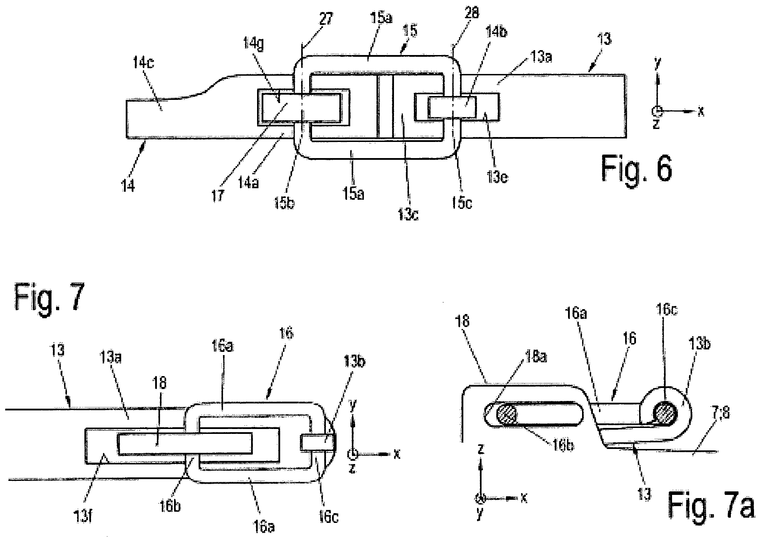

Die Koppelglieder 15, 16 sind z.B. kettengliedartig ausgebildet. Formen und Variationen sind unten im Zusammenhang mit den Figuren 6 bis 8 detailliert beschrieben.

Das erste Koppelglied 15 ist mit seinem rechten Ende mit dem Koppelabschnitt 14b des Verriegelungselementes 14 in einer Schwenkachse 28 verschwenkbar gekoppelt. Das andere, linke Ende des ersten Koppelgliedes 15 ist mit dem Vorsprung 17 in einer weiteren Schwenkachse 27 verschwenkbar gekoppelt. Die Schwenkachsen 27 und 28 verlaufen in y-Richtung parallel zu der Bremsscheibendrehachse 2a.

Das erste Koppelglied 15 erstreckt sich über dem Körper 14a des Verriegelungselementes 14, wobei zwischen dem ersten Koppelglied 15 und dem Körper 14a des Verriegelungselementes 14 der Koppelabschnitt 13c des Federelementes 13 angeordnet ist. Das nach oben umgebogene Ende des Koppelabschnitts 13c liegt unter dem ersten Koppelglied 15, wobei die Unterseite des Koppelabschnitts 13c auf einem Teil der Oberseite des Körpers 14a des Verriegelungselementes 14 aufliegt.

Eine Kopplung des Verriegelungselementes 14 und des Koppelabschnitts 13c des Federelementes 13 ist durch einen Formschluss gebildet, indem der Koppelabschnitt 14b des Verriegelungselementes 14 durch einen Schlitz 13e (siehe Fig. 6) in dem Koppelabschnitt 13c des Federelementes 13 hindurchgeführt ist. Die Seite des ersten Koppelgliedes 15, welche mit dem Koppelabschnitt 14b des Verriegelungselementes 14 in der Verschwenkachse 28 verbunden ist, verhindert ein Zurückgleiten des Koppelabschnitts 14b durch den Schlitz 13e.

Das zweite Koppelglied 16 ist mit seinem rechten Ende mit dem Lagerende 13b des Federelementes 13 verschwenkbar gekoppelt. Das andere, linke Ende des zweiten Koppelgliedes 16 ist mit dem Vorsprung 18 in einem Langloch 18a um eine Achse in y-Richtung parallel zu der Bremsscheibendrehachse 2a verschwenkbar und in einer x-z-Ebene verschiebbar gekoppelt. Das zweite Koppelglied 16 erstreckt sich von dem Lagerende 13b des Federelementes 13 in einem Teilbereich über dem Federkörper 13a des Federelementes 13.

Das Federelement 13 erstreckt sich auf der Oberseite 8c des Belagträgers 8 von der rechts neben dem Lagervorsprung 18 durch das zweite Koppelglied 16 festgelegte Position des Lagerendes 13b bis etwa zur Mitte unterhalb des ersten Koppelgliedes 15. Diese Position ist durch das erste Koppelglied 15 und den Formschluss der Kopplung des Verriegelungselementes 14 mit dem Koppelabschnitt 13c des Federelementes 13 bestimmt.

In der in Fig. 3a gezeigten entriegelten Stellung der Verriegelungseinrichtung 12 ist der Bremsbelag 30, 30' in den Bremsträger 4 eingesetzt, wobei der Belaghalter 11 noch nicht montiert ist. Das Federelement 13 ist aufgrund seiner Vorspannung nach oben gebogen, wobei das Lagerende 13b zusammen mit dem zweiten Koppelglied 16 nach links um ein Stück zur Mitte verschoben ist. Diese Verschiebung ist durch das Langloch 18a in dem Lagervorsprung 18, in welchem das zweite Koppelglied 16 verschiebbar und verschwenkbar angeordnet ist, ermöglicht. Außerdem ermöglicht die verschwenkbare Kopplung des Lagerendes 13b mit dem zweiten Koppelglied 16 eine Verschwenkbewegung des Federelementes 13 um ein Schwenkachse in y-Richtung.

Da das Federelement 13 nach oben gebogen ist, ist das linke Ende des Federelementes 13, welches über den Koppelabschnitt 13c mit dem Koppelabschnitt 14b des Verriegelungselementes 14 und darüber mit dem ersten Koppelglied 15 gekoppelt ist, nach unten gebogen. Aufgrund der Zwangsführung durch das erste Koppelglied 15 ist dieses in dem Vorsprung 17 in der Schwenkachse 27 nach oben verschwenkt. Daraus ergibt sich, dass das über die andere Schwenkachse 28 mit dem ersten Koppelglied 15 gekoppelte Verriegelungselement 14 auch um die Schwenkachse 27 so verschwenkt ist, dass der Verriegelungsabschnitt 14c des Verriegelungselementes 14 in der Ausnehmung 8e des Belagträgers 8 aufgenommen ist. Dabei ist das Verriegelungsende 14f des Verriegelungsabschnitts 14c so weit in der Ausnehmung 8e aufgenommen, dass es nicht über die Seitenfläche 8a in negativer x-Richtung übersteht. Auf diese Weise ist ein Einsetzen des Bremsbelags 30, 30 mit dem Belagträger 8 zwischen die Innenflächen 5a, 6a der Belagträgerhörner 5, 6 ohne Behinderung durch den Verriegelungsabschnitt 14c des Verriegelungselementes 14 der Verriegelungseinrichtung 12 ermöglicht.

Die Bremsbeläge 30, 30' werden in der entriegelten Stellung ihrer Verriegelungseinrichtungen 12, welche aufgrund der Vorspannung des Federelementes 13 wie oben erläutert eingenommen wird, in die Scheibenbremse 1 in den jeweiligen Belagschacht zwischen die zugehörigen Bremsträgerhörner 5 und 6 sowie 5' und 6' eingesetzt. Dann wird der Belaghalter 11 (gestrichelt) zum Einnehmen der Verriegelungsstellung der Verriegelungseinrichtung 12, die in Fig. 3 gezeigt ist, in negativer z-Richtung montiert und festgesetzt. Bei Montage des Belaghalters 11 werden nun die Verriegelungseinrichtungen 12 der eingesetzten Bremsbeläge 30, 30' automatisch aus der entriegelten Stellung in die Verriegelungsstellung verstellt. Bei Ausbau der Bremsbeläge 30, 30' wird der Belaghalter 11 entfernt, wodurch die Verriegelungseinrichtungen 12 wieder automatisch durch die Vorspannung ihrer Federelemente 13 in die jeweils entriegelte Stellung zurück verstellt werden.

Dadurch wird das Federelement 13 in Richtung auf den Stützvorsprung 19 gedrückt. Dabei bildet der Stützvorsprung 19 eine Begrenzung des Federwegs des Federelementes 13 in negativer z-Richtung. In der Verriegelungsstellung der Verriegelungseinrichtung 12 liegt das Federelement 13 nicht auf dem Stützvorsprung 19 auf, sondern ist über dem Stützvorsprung 19 in einem bestimmten, geringen Abstand angeordnet (Spiel). Das Lagerende 13b des Federelementes 13 ist nach rechts außen gedrückt und liegt auf der Oberseite 8c des Belagträgers 8 auf, ist aber in seiner Bewegung durch das zweite Koppelglied 16 und das Langloch 18a des Lagervorsprungs 18 begrenzt. Gleichzeitig drückt das Federelement 13 mit einer definierten Kraft über die Kopplung mit seinem Koppelabschnitt 13c auf das Verriegelungselement 14, das seinerseits um eine Kreisbahn um die Schwenkachse 27 aufgrund der Kopplung mit dem ersten Koppelglied 15 im Uhrzeigersinn soweit verschwenkt, bis die Unterseite des Körpers 14a des Verriegelungselementes 14 auf der Oberseite 8c des Belagträgers 8 zur Auflage kommt. Dabei schwenkt das Verriegelungsende 14c des Verriegelungselementes 14 aus der Ausnehmung 8e im Uhrzeigersinn heraus und gerät in Eingriff mit der Ausnehmung 21 des zugehörigen Bremsträgerhorns 5, 6.

Das Verriegelungselement 14 ist in der verriegelten Stellung der Verriegelungseinrichtung 12 einerseits radial durch das Federelement 13 und tangential durch den entsprechend geformten Vorsprung 17 auf dem Belagträger 8 fixiert (siehe Fig. 6). Ein selbsttätiges Entriegeln der Verriegelungseinrichtung 12 wird somit verhindert. Der Bremsbelag 30 ist auf diese Weise gegen in Abheben in tangentialer Richtung gesichert.

Durch das Andrücken des Verriegelungselementes mittels definierter Kraft des Federelementes 13 ist eine Überlastung ausgeschlossen. Bei zu großer Krafteinwirkung, z.B. durch einen aufsteigenden Bremsbelag 30 in z-Richtung, bei einer Bremsung entgegen der vorgesehenen Hauptbremsrichtung kann das Verriegelungselement 14 mit seinem Verriegelungsabschnitt 14c in die Ausnehmung 8e am Belagträger 8 ausweichen.

Zwischen dem Verriegelungsende 14f des Verriegelungsabschnitts 14c des Verriegelungselementes 14 und der oberen Kante des hinterschnittartigen Ausnehmung 21 im Bremsträgerhorn 5, 6 ist ein definiertes Spiel vorgesehen, welches sicherstellt, dass die Verschiebekraft des als Schiebesattel ausgebildeten Bremssattels 3 in y-Richtung nicht unerwünscht ansteigt.

Das Federelement 13 gleitet über den Arbeitsweg mit dem Koppelabschnitt 13c auf dem Körper 14a des Verriegelungselementes 14. Dadurch wird der Verschleiß des Belagträgers 8 in diesem Bereich und somit eine Erhöhung des Spiels zwischen dem Verriegelungselement 14 und der hinterschnittartigen Ausnehmung 21 im Bremsträgerhorn 5, 6 vermieden.

In den Figuren 4 und 4a sind perspektivische, schematische Ansichten von Kopplungsabschnitten 14b des Verriegelungselementes 14 und auch Lagerenden 13b des Federelementes 13 beispielhaft dargestellt.

Fig. 4 zeigt eine Ausbildung als Stanz-/Biegeteil, wobei der Kopplungsabschnitten 14b bzw. das Lagerende 13b aufgerollt ist, um eine Koppelöffnung A zur Kopplung mit einem Koppelglied 15, 16 zu erhalten.

In Fig. 4a wird ebenfalls ein Stanz-/Biegeteil benutzt. Die Öffnung A wird jedoch durch einen Stanz- oder Bohrvorgang erzeugt. Eine höhere Toleranz der Öffnung A kann möglich sein. Das Ende wird durch Verdrehen um die Längsachse des Federkörpers 13a bzw. Körpers 14a in die entsprechende Position der zugehörigen Schwenkachse gebracht.

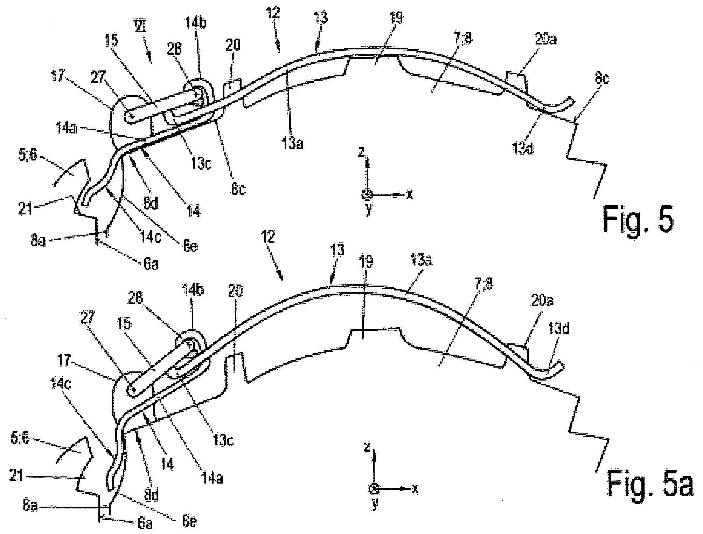

Fig. 5 zeigt eine seitliche schematische Teilansicht einer Variante des ersten Ausführungsbeispiels nach Fig. 3 in der Verriegelungsstellung der Verriegelungseinrichtung 12. In Fig. 5a ist eine seitliche schematische Teilansicht der Variante nach Fig. 5 in der entriegelten Stellung der Verriegelungseinrichtung 12 gezeigt.

Der Belagträger 8 ist an seiner Oberseite 8c in dieser Variante anstelle des Lagervorsprungs 18 mit einem Führungsvorsprung 20a versehen.

Im Unterschied zu der Ausführung nach Fig. 3 und 3a umfasst die Verriegelungseinrichtung 12 nur das erste Koppelglied 15. Die Kopplung zwischen diesem, dem Federelement 13 und dem Verriegelungselement 14 ist, wie auch die Ausbildung des Verriegelungselementes 14, bereits oben beschrieben.

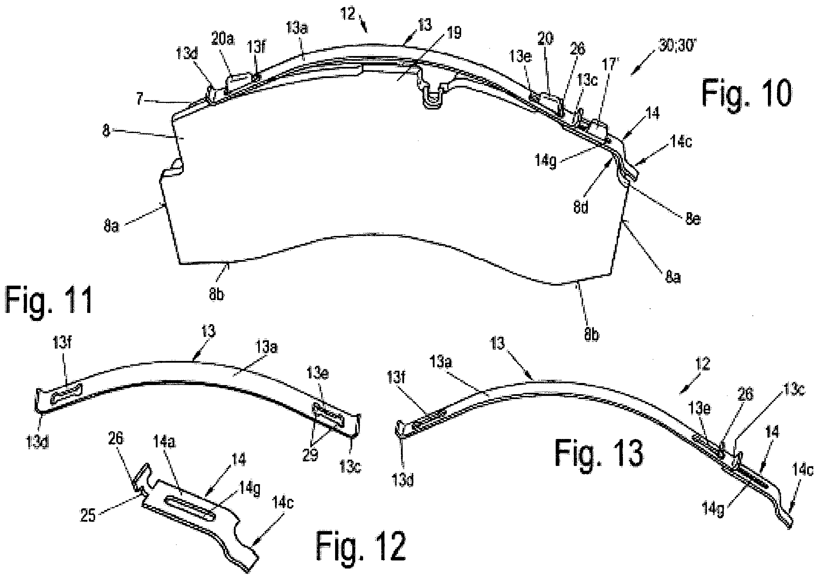

Das Federelement 13 weist in dieser Variante anstelle des Lagerendes 13b ein Auflagerende 13d auf. Das Auflagerende 13d ist mit einem größeren Biegeradius als das Ende des Kopplungsabschnitts 13c versehen. Der Federkörper 13a weist einen anderen Schlitz 13f (siehe Fig. 10, 11 und 13) auf, welcher dem Auflagerende 13d benachbart ist. Der andere Schlitz 13f ist um den Belagträger 8 angeordnet und gewährleistet in Zusammenwirkung mit dem Führungsvorsprung 20a eine Führung des Federelementes 13.

In der verriegelten Stellung der Verriegelungseinrichtung 12 ist das Federelement 12 in dem Abstand über dem Stützvorsprung 19 wie schon im Zusammenhang mit Fig. 3a erläutert, angeordnet. Das Auflagerende 13d liegt auf der Oberseite 8c des Belagträgers 8 auf, wobei der Koppelabschnitt 13c zwischen dem ersten Koppelglied 15 und dem Verriegelungselement 14 angeordnet ist und der Koppelabschnitt 13c mit seiner Unterseite auf der Oberseite des Verriegelungselementes 14 aufliegt und es auf die Oberseite 8c des Belagträgers 8 drückt.

Fig. 6 zeigt eine schematische Draufsicht in Richtung VI nach Fig. 3-3a und 5-5a.

Hier ist deutlich zu erkennen, wie schon oben angedeutet ist, dass der Koppelabschnitt 14b des Verriegelungselementes 14 durch den hier rechteckförmigen Schlitz 13e des Federelementes 13 in dem Übergang zwischen Federkörper 13a und Koppelabschnitt 13c geführt ist. Der Schlitz 13e ist in x-Richtung mit einem relativ großen Spiel versehen, wodurch eine Längsbewegung des Federelementes 13 verbessert ist.

Der Körper 14a des Verriegelungselementes 14 ist hier auch mit einer rechteckigen Öffnung 14g versehen, durch welche sich der Vorsprung 17 erstreckt. Das Verriegelungselement 14 ist auf diese Weise tangential, d.h. in x-Richtung festgelegt, wobei ein im Gegensatz zu dem großen Spiel der Öffnung 13e des Federelementes 13 geringes Spiel in x-Richtung vorgesehen ist.

Das erste Koppelglied 15 ist hier als eine Art Kettenglied ausgebildet und umfasst zwei parallel zueinander in x-Richtung verlaufende Längsabschnitte 15a, die mit rechtwinklig dazu angeordneten Koppelabschnitten 15b und 15c verbunden sind. Zumindest die Koppelabschnitte 15b und 15c weisen einen kreisrunden Querschnitt auf. Dabei ist der linke Koppelabschnitt 15b durch eine nicht gezeigte aber leicht vorstellbare Bohrung des Vorsprungs 17 geführt und in dieser um die Schwenkachse 27 verschwenkbar gelagert. Der rechte Koppelabschnitt 15c ist durch die Öffnung A (siehe Fig. 4-4a) des Koppelabschnitts 14b des Verriegelungselementes 14 gesteckt und in dieser um die Schwenkachse 28 verschwenkbar gelagert.

Fig. 7 zeigt eine schematische Draufsicht in Richtung VII nach Fig. 3-3a und 5-5a. In Fig. 7a ist eine schematische Seitenansicht eines Teilbereichs nach Fig. 7 gesehen in y-Richtung, wobei das Koppelglied 16 in einer x-z-Ebene geschnitten gezeigt ist.

Auch der rechte Endabschnitt des Federkörpers 13a des Federelementes 13 weist einen rechteckförmigen Schlitz 13f auf, durch welchen sich der Lagervorsprung 18 in z-Richtung erstreckt. Auch der Schlitz 13f ist in x-Richtung mit einem relativ großen Spiel versehen, wodurch eine Längsbewegung des Federelementes 13 verbessert ist.

Auch das zweite Koppelglied 16 ist hier als eine Art Kettenglied ausgebildet und umfasst wie das erste Koppelglied 16 zwei parallel zueinander in x-Richtung verlaufende Längsabschnitte 16a, die mit rechtwinklig dazu angeordneten Koppelabschnitten 16b und 16c verbunden sind. Zumindest die Koppelabschnitte 16b und 16c weisen einen kreisrunden Querschnitt auf. Dabei ist der linke Koppelabschnitt 16b durch das Langloch 18a des Lagervorsprungs 18 geführt und in diesem um eine Schwenkachse verschwenkbar und verschiebbar gelagert. Der rechte Koppelabschnitt 16c ist durch die Öffnung A (siehe Fig. 4-4a) des Lagerendes 13b gesteckt und in dieser um eine nicht näher bezeichnete Schwenkachse verschwenkbar gelagert.

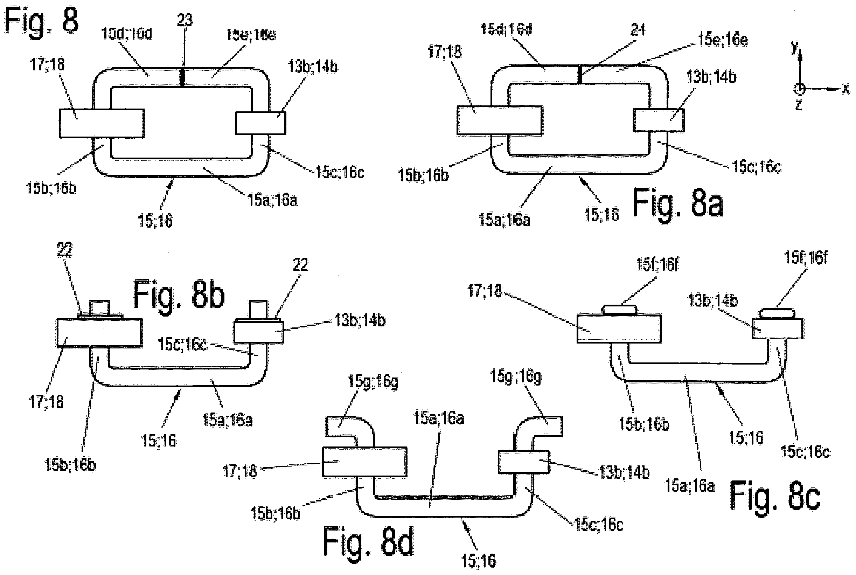

Die Figuren 8 bis 8d stellen verschiedene Varianten der Koppelglieder 15, 16 in schematischen Draufsichten nach Fig. 6 und 7 dar.

Fig. 8 zeigt ein Koppelglied 15, 16 in Ausführung als Kettenglied, wobei eine (nicht gezeigte) Grundform, z.B. in U-Gestalt, zunächst mit den Koppelabschnitten 15b, 16b und 15c, 16c durch Vorsprünge 17, 18 und Lagerende 13b bzw. Koppelabschnitt 14b gesteckt wird. Dann werden die Längsabschnitte 15d, 16d und 15e, 16e umgebogen und an den Stoßstellen durch eine stoffschlüssige Verbindung 23, beispielsweise Schweißen, Hartlöten, verbunden. Es kann auch, wie Fig. 8a zeigt, ein Spalt 24 ohne Verbindung verbleiben. Es sind aber auch (nicht gezeigt) andere Verbindungsmittel (Klammern o.ä.) möglich.

In Fig. 8b ist eine U-Form mit nur einem Längsabschnitt 15a, 16a als Koppelglied 15, 16 vorgesehen, wobei die Koppelabschnitte 15b, 16b und 15c, 16c gegenüber den Lagerstellen in Vorsprüngen 17, 18 und Lagerende 13b bzw. Koppelabschnitt 14b axial durch Axialsicherungen 22, z.B. Wellensicherungsringe, festgelegt werden. Dabei können die den Axialsicherungen 22 gegenüberliegenden Seiten der Koppelabschnitte 15b, 16b und 15c, 16c auch Axialsicherungen 22 oder Wellenschultern aufweisen.

Als weitere Variante zeigt Fig. 8c eine Axialsicherung der durchgesteckten Endabschnitte 15f, 16f der Koppelabschnitte 15b, 16b und 15c, 16c durch Vertaumelungen oder Schweißpunkte.

Auch eine Variante nach Fig. 8d mit umgebogenen Endabschnitten 15g, 16g ist natürlich möglich.

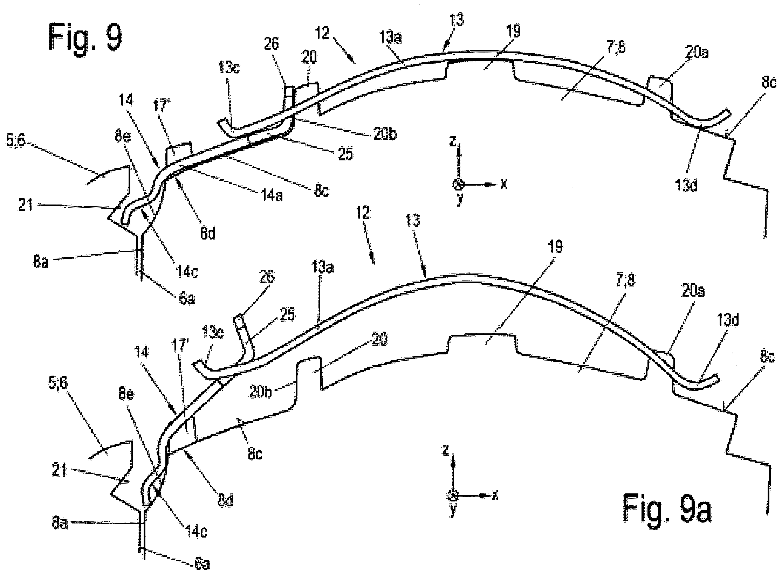

In Fig. 9 ist eine seitliche schematische Teilansicht eines zweiten Ausführungsbeispiels des erfindungsgemäßen Bremsbelags 30, 30' mit der Verriegelungseinrichtung 12 in Verriegelungsstellung dargestellt. Fig. 9a zeigt dazu die Verriegelungseinrichtung 12 in entriegelter Stellung. Fig. 10 ist eine schematische Perspektivansicht des zweiten Ausführungsbeispiels des erfindungsgemäßen Bremsbelags 30, 30' nach Fig. 9-9a. In Fig. 11 ist eine schematische Perspektivansicht des Federelementes 13 dargestellt. Fig. 12 zeigt eine schematische Perspektivansicht des Verriegelungselementes 14, und in Fig. 13 ist eine schematische Perspektivansicht der Verriegelungseinrichtung 12 des zweiten Ausführungsbeispiels des erfindungsgemäßen Bremsbelags nach Fig. 9-9a dargestellt.

Der Belagträger 8 weist an seiner Oberseite 8c in dem zweiten Ausführungsbeispiel keine Lagervorsprünge sondern Führungsvorsprünge 17', 20, 20a, sowie den Stützvorsprung 19 auf.

Im Unterschied zu der Ausführung nach Fig. 5 und 5a ist die Verriegelungseinrichtung 12 zweiteilig und umfasst nur das Federelement 13 und das Verriegelungselement 14.

Das Federelement 13 weist hier anstelle des Lagerendes 13b das Auflagerende 13d nach Fig. 5-5a auf. Der Federkörper 13a ist in jedem Endbereich mit jeweils einem Schlitz 13e, 13f versehen, dadurch ist das Federelement 13 einbausicher ohne Beachtung der Enden. Die Schlitze 13e, 13f weisen in dieser Ausführung eine Doppel-T-Form auf, so ist eine direkte Anlage des Verbindungsabschnitts 25 an der Schmalseite des zugehörigen Schlitzes 13e ermöglicht.

Der eine Schlitz 13e wirkt mit dem Führungsvorsprung 20 zusammen, und der andere Schlitz 13f mit dem Führungsvorsprung 20a. Die Führungsvorsprünge 20 und 20a erstrecken sich in z-Richtung jeweils durch den zugehörigen Schlitz 13e, 13f.

Das Verriegelungselement 14 ist anstelle des Koppelabschnitts 14b mit einem sich in y-Richtung erstreckenden Querende 26 versehen, welches mit dem Körper 14a des Verriegelungselementes 14 über einen schmalen, gebogenen Verbindungsabschnitt 25 T-förmig verbunden ist. Eine Biegung des Verbindungsabschnitts 25 mit dem Querende 26 kommuniziert mit der Form eines zur Seitenfläche 8a des Belagträgers 8 weisenden Stützabschnitts 20b des Führungsvorsprungs 20. Eine Breite (rechtwinklig zur Längsachse des Verriegelungselementes 14) des schmalen Verbindungsabschnitts 25 korrespondiert mit der Breite (rechtwinklig zur Längsachse des Federelementes 13) des Schlitzes 13e. Weiterhin ist der Körper 14a des Verriegelungselementes 14 mit einer schlitzförmigen Öffnung 14g durchbrochen, welche mit dem Vorsprung 17' zusammenwirkt. Der Vorsprung 17' erstreckt sich durch die Öffnung 14g hindurch in z-Richtung. Der Verriegelungsabschnitt 14c des Verriegelungselementes 14 ist oben schon beschrieben.

Eine Kopplung zwischen dem Federelement 13 und dem Verriegelungselement 14 ist so ausgeführt, dass das Querende 26 mit dem schmalen Verbindungsabschnitt 25 des Verriegelungselementes 14 durch den Schlitz 13e gesteckt ist und eine bewegliche, formschlüssige Kopplung mit dem Federelement 13 bildet.

Bei einem Zusammenbau der Verriegelungseinrichtung 12 wird zunächst das Federelement 13 so angeordnet, dass es mit seinem konvexen Bogen nach oben weist. Dann wird das Verriegelungselement 14 zunächst so gedreht, dass das Querende 26 mit dem Schlitz 13e des Federelementes 13 fluchtet. Dann wird das Querende 26 von unten so durch den Schlitz 13e gesteckt, dass der Verbindungsabschnitt 25 im Schlitz 13e aufgenommen ist. Das Verriegelungselement 14 wird schließlich mit dem Verbindungsabschnitt 25 in dem Schlitz 13e so gedreht, dass die Längsrichtung des Verriegelungselementes 14 mit der Längsrichtung des Federelementes 13 fluchtet.

Die so wie in Fig. 13 gezeigte zusammengebaute Verriegelungseinrichtung 12 kann dann auf die Oberseite 8c des Belagträgers 8 in einfacher Weise aufgesetzt werden, wobei die Vorsprünge 20a, 20 und 17' jeweils in den zugehörigen Schlitzen 13f, 13e und der schlitzartigen Öffnung 14g aufgenommen sind.

In der entriegelten Stellung nach Fig. 9a ist das Verriegelungselement 14 durch das nach oben in z-Richtung vorgespannt gebogene Federelement 13 über die Kopplung aus Querende 26 mit Verbindungsabschnitt 25 des Verriegelungselementes 14 mit dem Schlitz 13e und mittels der Zusammenwirkung zwischen Vorsprung 17' und schlitzförmige Öffnung 14g des Verriegelungselementes 14 so verschwenkt, dass der Verriegelungsabschnitt 14c in der Ausnehmung 8e des Belagträgers 8 aufgenommen ist, wie bereits oben beschrieben ist.

In der verriegelten Stellung der Verriegelungseinrichtung 12 ist das Federelement 12 in einem bestimmten, geringen Abstand über dem Stützvorsprung 19 wie schon oben beschrieben angeordnet (der Belaghalter ist nicht gezeigt, aber wie in Fig. 3 angeordnet, was leicht vorstellbar ist). Das Auflagerende 13d liegt auf der Oberseite 8c des Belagträgers 8 auf, wobei der Koppelabschnitt 13c mit seiner Unterseite auf der Oberseite des Verriegelungselementes 14 aufliegt und es auf die Oberseite 8c des Belagträgers 8 drückt. Der Körper 14a des Verriegelungselementes 14 ist korrespondierend zu der Kontur der Oberseite 8c des Belagträgers 8 geformt. Der gebogene Verbindungsabschnitt 25 und das Querende 26 sind so gestaltet, dass sie mit der Kontur des Stützabschnitts 20b und dessen Übergang zur Oberseite 8c korrespondieren. Dabei liegt das Verriegelungselement 14 mit dem Körper 14a auf der Oberseite 8c auf, und der gebogene Verbindungsabschnitt 25 und das Querende 26 schmiegen sich an die Kontur des Übergangs zwischen Oberseite 8c und Stützabschnitt 20b an.

Der Verriegelungsabschnitt 14c des Verriegelungselementes 14 steht in der verriegelten Stellung der Verriegelungseinrichtung 12 auch in diesem zweiten Ausführungsbeispiel in Eingriff mit der hinterschnittartigen Ausnehmung 21 des zugehörigen Bremsträgerhorns 5, 6.

Auch in dem ersten Ausführungsbeispiel nach Fig. 3-3a und der Variante nach Fig. 5-5a wirkt der Führungsabschnitt 20 (wie auch 20a) mit dem Schlitz 13e (13f) des Federelementes 13 zusammen, wie leicht aus Fig. 10 vorstellbar ist.

Das Sicherungselement 14 stellt in der verriegelten Stellung der Verriegelungseinrichtung 12 eine Wegbegrenzung mit einem definierten Spiel dar, die im eingebauten Zustand kraftfrei ist, wodurch die Verschiebbarkeit des Bremssattels 3 nicht erhöht wird.

Außerdem kann das Sicherungselement 14 im eingebauten Zustand bei Überlastung gegen die Federkraft des Federelementes 13 abheben und beinhaltet somit einen eingebauten Überlastschutz.

Die Verriegelungseinrichtung 12 ist, insbesondere im Fall des zweiten Ausführungsbeispiels, auch wieder demontierbar, nachdem der Belaghalter 11 entfernt worden ist.

Die Erfindung wird durch die oben beschriebenen Ausführungsbeispiele nicht eingeschränkt, sondern ist im Rahmen der beigefügten Ansprüche modifizierbar.

So ist es z.B. denkbar, dass die Kopplung des ersten Koppelglieds 15 mit dem Vorsprung 17 in der Schwenkachse 27 als eine verschwenkbare Klipsverbindung ausgebildet sein kann.

Die Koppelabschnitte 15b-c und 16b-c der Koppelglieder 15, 16 können in den jeweiligen Schwenkachsen auch mit entsprechenden Buchsen ausgebildet sein.

Der Stützvorsprung 19 kann einerseits auch ein Vorsprung von nur geringer Höhe in z-Richtung sein oder direkt von einem Abschnitt der Oberseite 8c des Belagträgers 8 gebildet sein.

Anstelle der Doppel-T-Form können die Schlitze 13e, 13f auch eine andere Form aufweisen, z.B. rechteckig mit abgerundeten Ecken.

Die Bremsbeläge 30, 30' können in allen Scheibenbremsen 1, insbesondere für Nutzfahrzeuge, eingesetzt werden.

Es ist denkbar, dass die Verriegelungseinrichtung 12 durch ein separates Betätigungsbauteil oder eine separate Betätigungseinrichtung aus der entriegelten Stellung in die Verriegelungsstellung verstellt werden können. Ein solches Betätigungsbauteil könnte z.B. in dem Belaghalter 11 oder separat davon für jeden Bremsbelag 30, 30' vorgesehen sein und beispielsweise mit einem Werkzeug betätigt werden. Z.B. ist ein mittels Schraubendreher drehbarer und in Längsrichtung verstellbarer Bolzen mit Bajonettverschluss als Betätigungsbauteil denkbar. Natürlich sind auch andere Ausführungen möglich.

### Bezugszeichenliste

- 1: Scheibenbremse
- 2: Bremsscheibe
- 2a: Bremsscheibendrehachse
- 3: Bremssattel
- 4: Bremsträger
- 4a: Stützabschnitt
- 5, 5'; 6, 6': Bremsträgerhorn
- 5a; 6a: Innenfläche
- 7, 7': Reibbelag
- 8, 8': Belagträger
- 8a: Seitenfläche
- 8b: Auflageabschnitt
- 8c: Oberseite
- 8d: Übergangsabschnitt
- 8e: Ausnehmung
- 9: Zuspannseite
- 10: Reaktionsseite
- 11: Belaghalter
- 12, 12': Verriegelungseinrichtung
- 13: Federelement
- 13a: Federkörper
- 13b: Lagerende
- 13c: Koppelabschnitt
- 13d: Auflagerende
- 13e-f: Schlitz
- 14: Verriegelungselement
- 14a: Körper
- 14b: Koppelabschnitt
- 14c: Verriegelungsabschnitt
- 14d, 14e: Bogenabschnitt
- 14f: Verriegelungsende
- 14g: Öffnung
- 15; 16: Koppelglied
- 15a; 16a: Längsabschnitt
- 15b-c; 16b-c: Koppelabschnitt
- 15d-e; 16d-e: Längsabschnitt
- 15f-g, 16f-g: Endabschnitt
- 17, 17': Vorsprung
- 18: Lagervorsprung
- 18a: Langloch
- 19: Stützvorsprung
- 20, 20a: Führungsvorsprung
- 20b: Stützabschnitt
- 21: Ausnehmung
- 22: Axialsicherung
- 23: Verbindung
- 24: Spalt
- 25: Verbindungsabschnitt
- 26: Querende
- 27; 28: Schwenkachse
- 29: Verbreiterung
- 30, 30', 30a: Bremsbelag
- 31: Belagfeder
- A: Koppelöffnung
- x, y, z: Koordinaten

## Patentansprüche

1. Bremsbelag (30, 31) einer Scheibenbremse (1), mit mindestens einem auf einem Belagträger (8, 8') aufgebrachten Reibbelag (7, 7'), und einer an dem Belagträger (8, 8') angeordneten Verriegelungseinrichtung (12) mit einem Federelement (13) und einem Sicherungselement (14), wobei das Federelement (13) und das Sicherungselement (14) der Verriegelungseinrichtung (12) als zwei separate Teile miteinander formschlüssig gekoppelt und relativ zueinander verschwenkbar sind,
**dadurch gekennzeichnet, dass**
die Verriegelungseinrichtung (12) aus einer entriegelten Stellung, in welcher ein Verriegelungsabschnitt (14c) des Sicherungselementes (14) in einer Ausnehmung (8e) des Belagträgers (8) aufgenommen ist, in eine Verriegelungsstellung, in welcher der Verriegelungsabschnitt (14c) des Sicherungselementes (14) von dem Belagträger (8) zur Zusammenwirkung mit einer Ausnehmung (21) eines Bremsträgerhorns (5, 5', 6, 6') einer zuzuordnenden Scheibenbremse (1) seitlich hervorsteht, und wieder zurück verstellbar ist.

2. Bremsbelag (30, 31) nach Anspruch 1, **dadurch gekennzeichnet, dass** das Federelement (13) in jedem Endbereich eines Federkörpers (13a) jeweils einen sich in Längsrichtung des Federelementes (13) erstreckenden Schlitz (13e, 13f) aufweist, und dass das Sicherungselement (14) einen Körper (14a) mit einer schlitzartigen Öffnung (14g) aufweist, wobei der Körper (14a) an einem Ende mit einem Verriegelungsabschnitt (14c) ausgebildet ist und mit einem anderen Ende mit dem Federelement (13) gekoppelt ist.

3. Bremsbelag (30, 31) nach Anspruch 2, **dadurch gekennzeichnet, dass** das Federelement (13) und das Sicherungselement (14) derart formschlüssig gekoppelt sind, indem der eine Schlitz (13e) eines Koppelabschnitts (13c) in dem einem Endbereich des Federelementes (13) mit dem anderen Ende des Sicherungselementes (14) in Eingriff steht.

4. Bremsbelag (30, 31) nach Anspruch 3, **dadurch gekennzeichnet, dass** das mit dem einen Schlitz (13e) des Federelementes (13) in Eingriff stehende andere Ende des Sicherungselementes (14) einen schmalen Verbindungsabschnitt (25) aufweist, der den Körper (14a) des Sicherungselementes (14) mit einem Querende (26) verbindet, wobei der schmale Verbindungsabschnitt (25) in dem Schlitz (13e) des Koppelabschnitts (13c) des Federelementes (13) beweglich aufgenommen ist.

5. Bremsbelag (30, 31) nach Anspruch 4, **dadurch gekennzeichnet, dass** die Verriegelungseinrichtung (12) derart auf einer Oberseite (8c) des Belagträgers (8) wieder entfernbar angeordnet ist, dass ein Vorsprung (17) des Belagträgers (8) in der schlitzartigen Öffnung (14g) des Sicherungselementes (14) angeordnet ist, und dass ein Führungsvorsprung (20) des Belagträgers (8) in dem Schlitz (13e) des Koppelabschnitts (13c) des Federelementes (13) und ein weiterer Führungsvorsprung (20a) des Belagträgers (8) in dem Schlitz (13f) des Federelementes (13) angeordnet sind.

6. Bremsbelag (30, 31) nach Anspruch 5, **dadurch gekennzeichnet, dass** die Verriegelungseinrichtung (12) derart auf der Oberseite (8c) des Belagträgers (8) wieder entfernbar angeordnet ist, dass in der Verriegelungsstellung der Verriegelungseinrichtung (12) ein dem anderen Schlitz (13f) des Federelementes (13) benachbartes Auflagerende (13d) des Federelementes (13) auf der Oberseite (8c) des Belagträgers (8) aufliegt, wobei der Koppelabschnitt (13c) des Federelementes (13) mit seiner Unterseite auf einer Oberseite des Verriegelungselementes (14) aufliegt und das Verriegelungselementes (14) auf die Oberseite (8c) des Belagträgers (8) drückt.

7. Bremsbelag (30, 31) nach Anspruch 3, **dadurch gekennzeichnet, dass** das mit dem einen Schlitz (13e) des Federelementes (13) in Eingriff stehende andere Ende des Sicherungselementes (14) einen Koppelabschnitt (14b) mit einer Koppelöffnung A aufweist, wobei ein Abschnitt zwischen dem Körper (14a) des Sicherungselementes (14) und dem Koppelabschnitt (14b) in dem Schlitz (13e) des Koppelabschnitts (13c) des Federelementes (13) beweglich aufgenommen ist.

8. Bremsbelag (30, 31) nach Anspruch 7, **dadurch gekennzeichnet, dass** die Verriegelungseinrichtung (12) weiterhin ein Koppelglied (15) umfasst, welches mit dem Koppelabschnitt (14b) des Sicherungselementes (14) in einer Schwenkachse (28) verschwenkbar verbunden ist, und welches in einer weiteren Schwenkachse (27) mit einem Vorsprung (17) an der Oberseite (8c) des Belagträgers (8) verschwenkbar verbunden ist.

9. Bremsbelag (30, 31) nach Anspruch 8, **dadurch gekennzeichnet, dass** das Koppelglied (15) mindestens einen Längsabschnitt (15a) aufweist, welcher an seinen Enden mit jeweils einem Koppelabschnitt (15b, 15c) verbunden ist, wobei ein Koppelabschnitt (15c) mit dem Koppelabschnitt (14b) des Sicherungselementes (14) verschwenkbar verbunden ist und ein Koppelabschnitt (15b) mit dem Vorsprung (17) verschwenkbar verbunden ist.

10. Bremsbelag (30, 31) nach Anspruch 8 oder 9, **dadurch gekennzeichnet, dass** das Koppelglied (15) als ein Kettenglied ausgebildet ist.

11. Bremsbelag (30, 31) nach einem der Ansprüche 8 bis 10, **dadurch gekennzeichnet, dass** die Verriegelungseinrichtung (12) derart auf einer Oberseite (8c) des Belagträgers (8) angeordnet ist, dass ein Vorsprung (17) des Belagträgers (8) in der schlitzartigen Öffnung (14g) des Sicherungselementes (14) angeordnet ist, und dass ein Führungsvorsprung (20) des Belagträgers (8) in dem Schlitz (13e) des Koppelabschnitts (13c) des Federelementes (13) und ein weiterer Führungsvorsprung (20a) des Belagträgers (8) in dem Schlitz (13f) des Federelementes (13) angeordnet sind, wobei das Koppelglied (15) mit dem Vorsprung (17) des Belagträgers (8) in einer Schwenkachse (27) verschwenkbar verbunden ist.

12. Bremsbelag (30, 31) nach Anspruch 11, **dadurch gekennzeichnet, dass** die Verriegelungseinrichtung (12) derart auf der Oberseite (8c) des Belagträgers (8) angeordnet ist, dass in der Verriegelungsstellung der Verriegelungseinrichtung (12) ein dem anderen Schlitz (13f) des Federelementes (13) benachbartes Auflagerende (13d) des Federelementes (13) auf der Oberseite (8c) des Belagträgers (8) aufliegt, wobei der Koppelabschnitt (13c) des Federelementes (13) zwischen dem ersten Koppelglied (15) und dem Verriegelungselement (14) angeordnet ist und der Koppelabschnitt (13c) des Federelementes (13) mit seiner Unterseite auf der Oberseite des Verriegelungselementes (14) aufliegt und das Verriegelungselement (14) auf die Oberseite (8c) des Belagträgers (8) drückt.

13. Bremsbelag (30, 31) nach Anspruch 11 oder 12, **dadurch gekennzeichnet, dass** die Verriegelungseinrichtung (12) auf der Oberseite (8c) des Belagträgers (8) derart wieder entfernbar angeordnet ist, dass das Koppelglied (15) U-förmig mit wieder entfernbaren Axialsicherungen (22) ausgebildet ist oder/und dass die Verbindung des Koppelglieds (15) mit dem Vorsprung (17) oder mit dem Koppelabschnitt (14b) des Sicherungselementes (14) als Klipsverbindung ausgebildet ist.

14. Bremsbelag (30, 31) nach einem der Ansprüche 8 bis 10, **dadurch gekennzeichnet, dass** die Verriegelungseinrichtung (12) weiterhin ein weiteres Koppelglied (16) umfasst, welches mit einem mit einer Öffnung (A) ausgebildeten Lagerende (13b) des Federelementes (13) verschwenkbar verbunden ist, und welches mit einem Lagervorsprung (18) an der der Oberseite (8c) des Belagträgers (8) verschwenkbar verbunden ist.

15. Bremsbelag (30, 31) nach Anspruch 14, **dadurch gekennzeichnet, dass** das weitere Koppelglied (16) mit dem Lagervorsprung (18) verschwenkbar und verschiebbar verbunden ist.

16. Bremsbelag (30, 31) nach Anspruch 13, **dadurch gekennzeichnet, dass** das weitere Koppelglied (16) mindestens einen Längsabschnitt (16a) aufweist, welcher an seinen Enden mit jeweils einem Koppelabschnitt (16b, 16c) verbunden ist, wobei ein Koppelabschnitt (16c) mit dem Lagerende (13b) des Federelementes (13) verschwenkbar verbunden ist und ein Koppelabschnitt (16b) an dem Lagervorsprung (18) angelenkt ist.

17. Bremsbelag (30, 31) nach einem der Ansprüche 13 bis 16, **dadurch gekennzeichnet, dass** das weitere Koppelglied (16) als ein Kettenglied ausgebildet ist.

18. Bremsbelag (30, 31) nach einem der Ansprüche 13 bis 15, **dadurch gekennzeichnet, dass** die Verriegelungseinrichtung (12) derart auf einer Oberseite (8c) des Belagträgers (8) angeordnet ist, dass der Vorsprung (17) des Belagträgers (8) in der schlitzartigen Öffnung (14g) des Sicherungselementes (14) angeordnet ist, und dass ein Führungsvorsprung (20) des Belagträgers (8) in dem Schlitz (13e) des Koppelabschnitts (13c) des Federelementes (13), und ein Lagervorsprung (18) des Belagträgers (8) in dem Schlitz (13f) des Federelementes (13) angeordnet sind, wobei das Koppelglied (15) mit dem Vorsprung (17) des Belagträgers (8) in einer Schwenkachse (27) verschwenkbar verbunden ist, und wobei das weitere Koppelglied (16) an dem Lagervorsprung (18) angelenkt ist.

19. Bremsbelag (30, 31) nach Anspruch 18, **dadurch gekennzeichnet, dass** die Verriegelungseinrichtung (12) derart auf der Oberseite (8c) des Belagträgers (8) angeordnet ist, dass in der Verriegelungsstellung der Verriegelungseinrichtung (12) das Auflagerende (13d) des Federelementes (13) auf der Oberseite (8c) des Belagträgers (8) aufliegt, wobei der Koppelabschnitt (13c) des Federelementes (13) zwischen dem ersten Koppelglied (15) und dem Verriegelungselement (14) angeordnet ist und der Koppelabschnitt (13c) des Federelementes (13) mit seiner Unterseite auf der Oberseite des Verriegelungselementes (14) aufliegt und das Verriegelungselement (14) auf die Oberseite (8c) des Belagträgers (8) drückt.

20. Bremsbelag (30, 31) nach einem der Ansprüche 11 bis 19, **dadurch gekennzeichnet, dass** die Verriegelungseinrichtung (12) auf der Oberseite (8c) des Belagträgers (8) derart wieder entfernbar angeordnet ist, dass das weitere Koppelglied (16) U-förmig mit wieder entfernbaren Axialsicherungen (22) ausgebildet ist oder/und dass die Verbindung des weiteren Koppelglieds (16) mit dem Lagervorsprung (18) oder mit dem Lagerende (13b) des Federelementes (13) als Klipsverbindung ausgebildet ist.

21. Scheibenbremse (1), insbesondere Schiebesattelscheibenbremse, für ein Fahrzeug, mindestens aufweisend einen Bremssattel (3), einen ortsfest fixierten Bremsträger (4), der zwei Paar Bremsträgerhörner (5, 5'; 6, 6') aufweist, durch die jeweils ein Bremsbelag (30, 30') gehalten wird, sowie mindestens einen Belaghalter (11), **dadurch gekennzeichnet, dass** mindestens ein Bremsbelag (30, 30') nach einem der vorhergehenden Ansprüche ausgebildet ist, und dass mindestens eines der zwei Paar Bremsträgerhörner (5, 5'; 6, 6'), mit welchem der mindestens eine Bremsbelag (30, 30') nach einem der vorhergehenden Ansprüche in Kontakt steht, eine Ausnehmung (21) aufweist, welche mit dem Verriegelungsabschnitt (14c) der Verriegelungseinrichtung (12) des mindestens einen Bremsbelags (30, 30') nach einem der vorhergehenden Ansprüche zusammenwirkt.

22. Scheibenbremse (1) nach Anspruch 21, **dadurch gekennzeichnet, dass** die Ausnehmung (21) hinterschnittartig ausgebildet ist.

23. Scheibenbremse (1) nach Anspruch 21 oder 22, **dadurch gekennzeichnet, dass** die Verriegelungseinrichtung (12) des mindestens einen Bremsbelags (30, 30') aus einer entriegelten Stellung, in welcher ein Verriegelungsabschnitt (14c) des Sicherungselementes (14) in einer Ausnehmung (8e) des Belagträgers (8) aufgenommen ist, in eine Verriegelungsstellung, in welcher der Verriegelungsabschnitt (14c) des Sicherungselementes (14) von dem Belagträger (8) zur Zusammenwirkung mit der Ausnehmung (21) des zugehörigen Bremsträgerhorns (5, 5', 6, 6') in Eingriff steht, verstellt ist, wenn der Belaghalter (11) montiert ist.

24. Scheibenbremse (1) nach Anspruch 23, **dadurch gekennzeichnet, dass** der Belaghalter (11) die Verriegelungseinrichtung (12) des mindestens einen Bremsbelags (30, 30') automatisch aus der entriegelten Stellung in die Verriegelungsstellung verstellt, wenn er montiert wird.

25. Scheibenbremse (1) nach Anspruch 23 oder 24, **dadurch gekennzeichnet, dass** mindestens ein separates Betätigungsbauteil zur Verstellung der Verriegelungseinrichtung (12) des mindestens einen Bremsbelags (30, 30') aus der entriegelten Stellung in die Verriegelungsstellung vorgesehen ist.

## Claims

1. A brake pad 30, 31 of a disc brake 1 having at least one friction pad 7, 7' mounted on a pad carrier 8, 8' and a locking device 12 arranged on the pad carrier 8, 8' having a spring element 13 and a securing element 14, the spring element 13 and the securing element 14 of the locking device 12 being coupled to one another in a form fit as two separate parts and pivotable relative to one another,
**characterised in that**
the locking device 12 can be moved out of an unlocked position, in which a locking section 14c of the securing element 14 is accommodated in a recess 8e in the pad carrier 8, into a locking position, in which the locking section 14c of the securing element 14 projects laterally from the pad carrier 8 in order to interact with a recess 21 in a brake carrier lug 5, 5', 6, 6' of an associated disc brake 1, and back again.

2. A brake pad 30, 31 according to claim 1, **characterised in that** the spring element 13 has in each end region of a spring body 13a slots 13e, 13f extending in the longitudinal direction of the spring element 13 and that the securing element 14 has a body 14a having a slot-type opening 14g, the body 14a being designed with a locking section 14c at one end and being coupled to the spring element 13 at another end.

3. A brake pad 30, 31 according to claim 2, **characterised in that** the spring element 13 and the securing element 14 are coupled in a form fit such that one slot 13e in a coupling section 13c in one end region of the spring element 13 is engaged with the other end of the securing element 14.

4. A brake pad 30, 31 according to claim 3, **characterised in that** the other end of the securing element 14, which is engaged with one slot 13e in the spring element 13, has a narrow connecting section 25, which connects the body 14a of the securing element 14 to a transverse end 26, the narrow connecting section 25 being accommodated such that it is able to move in the slot 13e in the coupling section 13c of the spring element 13.

5. A brake pad 30, 31 according to claim 4, **characterised in that** the locking device 12 is arranged on an upper side 8c of the pad carrier 8 in a manner which allows it to be removed again such that a projection 17 of the pad carrier 8 is arranged in the slot-type opening 14g in the securing element 14, and that a guide projection 20 of the pad carrier 8 is arranged in the slot 13e in the coupling section 13c of the spring element 13 and a further guide projection 20a of the pad carrier 8 is arranged in the slot 13f in the spring element 13.

6. A brake pad 30, 31 according to claim 5, **characterised in that** the locking device 12 is arranged on the upper side 8c of the pad carrier 8 in a manner which allows it to be removed again such that when the locking device 12 is in the locking position a support end 13d of the spring element 13 adjacent to the other slot 13f in the spring element 13 rests on the upper side 8c of the pad carrier 8, the underside of the coupling section 13c of the spring element 13 resting on an upper side of the locking element 14 and pressing the locking element 14 onto the upper side 8c of the pad carrier 8.

7. A brake pad 30, 31 according to claim 3, **characterised in that** the other end of the securing element 14, which is engaged with one slot 13e in the spring element 13, has a coupling section 14b having a coupling opening A, a section between the body 14a of the securing element 14 and the coupling section 14b being accommodated such that it is able to move in the slot 13e in the coupling section 13c of the spring element 13.

8. A brake pad 30, 31 according to claim 7, **characterised in that** the locking device 12 also comprises a coupling member 15, which is connected such that it is able to pivot to the coupling section 14b of the securing element 14 in one pivot axis 28 and which is connected such that it is able to pivot to a projection 17 on the upper side 8c of the pad carrier 8 in a further pivot axis 27.

9. A brake pad 30, 31 according to claim 8, **characterised in that** the coupling member 15 has at least one longitudinal section 15a, the ends of which are each connected to a coupling section 15b, 15c, one coupling section 15c being connected such that it is able to pivot to the coupling section 14b of the securing element 14 and one coupling section 15b being connected such that it is able to pivot to the projection 17.

10. A brake pad 30, 31 according to claim 8 or 9, **characterised in that** the coupling member 15 is designed as a chain link.

11. A brake pad 30, 31 according to any of claims 8 to 10, **characterised in that** the locking device 12 is arranged on an upper side 8c of the pad carrier 8 in such a way that a projection 17 of the pad carrier 8 is arranged in the slot-type opening 14g in the securing element 14, and that a guide projection 20 of the pad carrier 8 is arranged in the slot 13e in the coupling section 13c of the spring element 13 and a further guide projection 20a of the pad carrier 8 is arranged in the slot 13f in the spring element 13, the coupling member 15 being connected such that it is able to pivot to the projection 17 of the pad carrier 8 in a pivoting axis 27.

12. A brake pad 30, 31 according to claim 11, **characterised in that** the locking device 12 is arranged on the upper side 8c of the pad carrier 8 in such a way that when the locking device 12 is in the locking position a support end 13d of the spring element 13 adjacent to the other slot 13f in the spring element 13 rests on the upper side 8c of the pad carrier 8, the coupling section 13c of the spring element 13 being arranged between the first coupling member 15 and the locking element 14, and the underside of the coupling section 13c of the spring element 13 resting on the upper side of the locking element 14 and pressing the locking element 14 onto the upper side 8c of the pad carrier 8.

13. A brake pad 30, 31 according to claim 11 or 12, **characterised in that** the locking device 12 is arranged on the upper side 8c of the pad carrier 8 in a manner which allows it to be removed again such that the coupling member 15 is formed in a U shape with removable axial retention means 22 and/or that the connection of the coupling member 15 to the projection 17 or to the coupling section 14b of the securing element 14 is designed as a clip-type connection.

14. A brake pad 30, 31 according to any of claims 8 to 10, **characterised in that** the locking device 12 also has a further coupling member 16, which is connected such that it is able to pivot to a bearing end 13b of the spring element 13, said bearing end being designed with an opening A, and which is connected such that it is able to pivot to a bearing projection 18 on the upper side 8c of the pad carrier 8.

15. A brake pad 30, 31 according to claim 14, **characterised in that** the further coupling member 16 is connected to the bearing projection 18 such that is able to pivot and slide.

16. A brake pad 30, 31 according to claim 13, **characterised in that** the further coupling member 16 has at least one longitudinal section 16a, the ends of which are each connected to a coupling section 16b, 16c, one coupling section 16c being connected such that it is able to pivot to the bearing end 13b of the spring element 13 and one coupling section 16b being connected such that it is able to pivot to the bearing projection 18.

17. A brake pad 30, 31 according to one of claims 13 to 16, **characterised in that** the further coupling member 16 is designed as a chain link.

18. A brake pad 30, 31 according to one of claims 13 to 15, **characterised in that** the locking device 12 is arranged on an upper side 8c of the pad carrier 8 such that the projection 17 of the pad carrier 8 is arranged in the slot-type opening 14g in the securing element 14, and that a guide projection 20 of the pad carrier 8 is arranged in the slot 13e in the coupling section 13c of the spring element 13 and a bearing projection 18 of the pad carrier 8 is arranged in the slot 13f in the spring element 13, the coupling member 15 being connected such that it is able to pivot to the projection 17 of the pad carrier 8 in a pivot axis 27 and the further coupling member 16 being connected such that it is able to pivot to the bearing projection 18.

19. A brake pad 30, 31 according to claim. 18, **characterised in that** the locking device 12 is arranged on the upper side 8c of the pad carrier 8 such that when the locking device 12 is in the locking position a support end 13d of the spring element 13 rests on the upper side 8c of the pad carrier 8, the coupling section 13c of the spring element 13 being arranged between the first coupling member 15 and the locking element 14 and underside of the coupling section 13c of the spring element 13 resting on the upper side of the locking element 14 and pressing the locking element 14 onto the upper side 8c of the pad carrier 8.

20. A brake pad 30, 31 according to any of claims 11 to 19, **characterised in that** the locking device 12 is arranged on the upper side 8c of the pad carrier 8 in a manner which allows it to be removed again such that the further coupling member 16 is formed in a U shape with removable axial retention means 22 and/or that the connection of the further coupling member 16 to the bearing projection 18 or to the bearing end 13b of the spring element 13 is designed as a clip-type connection.

21. A disc brake 1, in particular a sliding calliper disc brake, for a vehicle, having at least a brake calliper 3, a fixed-location brake carrier 4 that has two pairs of brake carrier lugs 5, 5'; 6, 6', each holding a brake pad 30, 30', and at least one pad holder 11, **characterised in that** at least one brake pad 30, 30' is designed according to one of the preceding claims and that at least one of the two pairs of brake carrier lugs 5, 5'; 6, 6' with which the at least one brake pad 30, 30' according to one of the preceding claims is in contact has a recess 21 which interacts with the locking section 14c of the locking device 12 of the at least one brake pad 30, 30' according to one of the preceding claims.

22. A disc brake 1 according to claim 21, **characterised in that** the recess 21 is formed in the manner of an undercut.

23. A disc brake 1 according to claim 21 or 22, **characterised in that** the locking device 12 of the at least one brake pad 30, 30' is moved out of an unlocked position, in which a locking section 14c of the securing element 14 is accommodated in a recess 8e in the pad carrier 8, into a locking position, in which the locking section 14c of the securing element 14 of the pad carrier 8 is engaged in order to interact with the recess 21 in the associated brake carrier lug 5, 5', 6, 6', when the pad holder 11 is fitted.

24. A disc brake 1 according to claim 23, **characterised in that**, when fitted, the pad holder 11 automatically moves the locking device 12 of the at least one brake pad 30, 30' automatically out of the unlocked position into the locking position.

25. A disc brake 1 according to claim 23 or 24, **characterised in that** at least one separate actuating component is provided for moving the locking device 12 of the at least one brake pad 30, 30' out of the unlocked position into the locking position.

## Revendications

1. Garniture (30, 31) de frein d'un frein (1) à disque, comprenant au moins une garniture (7, 7') de friction déposée sur un porte-garniture (8, 8') et un dispositif (12) de verrouillage monté sur le porte-garniture (8, 8') et ayant un élément (13) de ressort et un élément (14) de fixation, l'élément (13) de ressort et l'élément (14) de fixation du dispositif (12) de verrouillage étant couplés entre eux à complémentarité de forme en tant que deux parties distinctes et pouvant pivoter l'un par rapport à l'autre,
**caractérisée en ce que**
le dispositif (12) de verrouillage peut passer, et inversement, d'une position déverrouillée, dans laquelle une partie (14c) de verrouillage de l'élément (14) de fixation est reçue dans un évidement (8e) du porte-garniture (8), à une position de verrouillage, dans laquelle la partie (14c) de verrouillage de l'élément (14) de fixation fait saillie latéralement du porte-garniture (8), pour coopérer avec un évidement (21) d'une corne (5, 5'; 6, 6') de porte-garniture d'un frein (1) à disque associé.

2. Garniture (30, 31) de frein suivant la revendication 1, **caractérisée en ce que** l'élément (13) de ressort a, dans chaque partie d'extrémité d'un corps (13a) de ressort, une fente (13e, 13f) s'étendant dans la direction longitudinale de l'élément (13) de ressort et **en ce que** l'élément (14) de fixation a un corps (14a) ayant une ouverture (14g) en forme de fente, le corps (14a) étant constitué à une extrémité en ayant une partie (14c) de verrouillage et étant couplé à une autre extrémité à l'élément (13) de ressort.

3. Garniture (30, 31) de frein suivant la revendication 2, **caractérisée en ce que** l'élément (13) de ressort et l'élément (14) de fixation sont couplés, à complémentarité de forme, par le fait que la une fente (13e) d'une partie (13c) de couplage, dans la une partie d'extrémité de l'élément (13) de ressort, est en prise avec l'autre extrémité de l'élément (14) de fixation.

4. Garniture (30, 31) de frein suivant la revendication 3, **caractérisée en ce que** l'autre extrémité, en prise avec la une fente (13e) de l'élément (13) de ressort, de l'élément (14) de fixation a une partie (25) de liaison étroite, qui relie le corps (14a) de l'élément (14) de fixation à une extrémité (26) transversale, la partie (25) étroite de liaison étant reçue de manière mobile dans la fente (13e) de la partie (13c) de couplage de l'élément (13) de ressort.

5. Garniture (30, 31) de frein suivant la revendication 4, **caractérisée en ce que** le dispositif (12) de verrouillage est monté, avec possibilité d'être retiré, sur un côté (8c) supérieur du porte-garniture (8), de manière à ce qu'une saillie (17) du porte-garniture (8) soit mise dans l'ouverture (14g) de type à fente de l'élément (14) de fixation, et **en ce qu'**une saillie (20) de guidage du porte-garniture (8) soit mise dans la fente (13e) de la partie (13c) de couplage de l'élément (13) de ressort et qu'une autre saillie (20) de guidage du porte-garniture (8) soit mise dans la fente (13f) de l'élément (13) de ressort.

6. Garniture (30, 31) de frein suivant la revendication 5, **caractérisée en ce que** le dispositif (12) de verrouillage est monté, avec possibilité d'être retiré, sur le côté (8c) supérieur du porte-garniture (8), de manière à ce que, dans la position de verrouillage du dispositif (12) de verrouillage, une extrémité (13d) d'application, voisine de l'autre fente (13f) de l'élément (13) de ressort, s'applique au côté (8c) supérieur du porte-garniture (8), la partie (13c) de couplage de l'élément (13) de ressort s'appliquant, par son côté inférieur, à un côté supérieur de l'élément (14) de fixation et l'élément (14) de fixation s'appuie sur le côté (8c) supérieur du porte-garniture (8).

7. Garniture (30, 31) de frein suivant la revendication 3, **caractérisée en ce que** l'autre extrémité, en prise avec la une fente (13e) de l'élément (13) de ressort, de l'élément (14) de fixation a une partie (14b) de couplage ayant une ouverture A de couplage, une partie comprise entre le corps (14a) de l'élément (14) de fixation et la partie (14b) de couplage étant reçue de manière amovible dans la fente (13e) de la partie (13c) de couplage de l'élément (13) de ressort.

8. Garniture (30, 31) de frein suivant la revendication 7, **caractérisée en ce que** le dispositif (12) de verrouillage comprend, en outre, un organe (15) de couplage, qui est relié à pivotement à la partie (14b) de couplage de l'élément (14) de fixation suivant un axe (28) de pivotement et qui est relié à pivotement suivant un autre axe (27) de pivotement à une saillie (17) au côté (8c) supérieur du porte-garniture (8).

9. Garniture (30, 31) de frein suivant la revendication 8, **caractérisée en ce que** l'organe (15) de couplage a au moins une partie (15a) longitudinale, qui à ses extrémités est reliée à respectivement une partie (15b, 15c) de couplage, une partie (15c) de couplage étant reliée à pivotement à la partie (14b) de couplage de l'élément (14) de fixation et une partie (15b) de couplage étant reliée à pivotement à la saillie (17).

10. Garniture (30, 31) de frein suivant la revendication 8 ou 9, **caractérisée en ce que** l'organe (15) de couplage est constitué sous la forme d'un maillon de chaîne.

11. Garniture (30, 31) de frein suivant l'une des revendications 8 à 10, **caractérisée en ce que** le dispositif (12) de verrouillage est monté sur un côté (8c) supérieur du porte-garniture (8), de manière à ce qu'une saillie (17) du porte-garniture (8) soit mise dans l'ouverture (14g) de type en fente de l'élément (14) de fixation et **en ce qu'**une saillie (20) de guidage du porte-garniture (8) est mise dans la fente (13e) de la partie (13c) de couplage de l'élément (13) de ressort et une autre saillie (20) de guidage du porte-garniture (8) est mise dans la fente (13f) de l'élément (13) de ressort, l'organe (15) de couplage étant relié à pivotement suivant un axe (27) de pivotement à la saillie (17) du porte-garniture (8).

12. Garniture (30, 31) de frein suivant la revendication 11, **caractérisée en ce que** le dispositif (12) de verrouillage est mis sur le côté (8c) supérieur du porte-garniture (8) de manière à ce que, dans la position de verrouillage du dispositif (12) de verrouillage, une extrémité (13b) d'application, voisine de l'autre fente (13f) de l'élément (13) de ressort, de l'élément (13) de ressort s'applique au côté (8c) supérieur du porte-garniture (8), la partie (13c) de couplage de l'élément (13) de ressort étant disposée entre le premier organe (15) de couplage et l'élément (14) de fixation et la partie (13c) de couplage de l'élément (13) de ressort s'appliqante, par son côté inférieur, au côté supérieur de l'élément (14) de fixation et l'élément (14) de fixation pousse le côté (8c) supérieur du porte-garniture (8).

13. Garniture (30, 31) de frein suivant la revendication 11 ou 12, **caractérisée en ce que** le dispositif (12) de verrouillage est disposé, avec possibilité d'être retiré, sur le côté (8c) supérieur du porte-garniture (8), de manière à ce que l'organe (15) de couplage soit constitué en forme de U, en ayant des fixations (22) axiales pouvant être retirées, ou/et de manière à ce que la liaison de l'organe (15) de couplage à la saillie (17) ou à la partie (14b) de couplage de l'élément (14) de fixation soit constituée sous la forme d'une liaison à clips.

14. Garniture (30, 31) de frein suivant l'une des revendications 8 à 10, **caractérisée en ce que** le dispositif (12) de verrouillage comprend, en outre, un autre organe (16) de couplage, qui est relié à pivotement à une extrémité (13b) de palier, constituée en ayant une ouverture (A), de l'élément (13) de ressort et qui est relié à pivotement à une saillie (18) de palier sur le côté (8c) supérieur du porte-garniture (8).

15. Garniture (30, 31) de frein suivant la revendication 14, **caractérisée en ce que** l'autre organe (16) de couplage est relié à pivotement et à coulissement à la saillie (18) de palier.

16. Garniture (30, 31) de frein suivant la revendication 13, **caractérisée en ce que** l'autre organe (16) de couplage a au moins une partie (16a) longitudinale, qui à ses extrémités est reliée à respectivement une partie (16b, 16c) de couplage, dans laquelle une partie (16c) de couplage est reliée à pivotement à l'extrémité (13b) de palier de l'élément (13) de ressort et une partie (16b) de couplage est articulée à la saillie (18) de palier.

17. Garniture (30, 31) de frein suivant l'une des revendications 13 à 16, **caractérisée en ce que** l'autre organe (16) de couplage est constitué sous la forme d'un maillon de chaîne.

18. Garniture (30, 31) de frein suivant l'une des revendications 13 à 15, **caractérisée en ce que** le dispositif (12) de verrouillage est monté sur un côté (8c) supérieur du porte-garniture (8), de manière à ce que la saillie (17) du porte-garniture (8) soit mise dans l'ouverture (14g) de type en fente de l'élément (14) de fixation, et de manière à ce qu'une saillie (20) de guidage du porte-garniture (8) soit mise dans la fente (13e) de la partie (13c) de couplage de l'élément (13) de ressort et une saillie (18) de palier du porte-garniture (8) dans la fente (13f) de l'élément (13) de ressort, l'organe (15) de couplage étant relié à pivotement à la saillie (17) du porte-garniture (8) suivant un axe (27) de pivotement et l'autre organe (16) de couplage étant articulé à la saillie (18) de palier.

19. Garniture (30, 31) de frein suivant la revendication 18, **caractérisée en ce que** le dispositif (12) de verrouillage est monté sur le côté (8c) supérieur du porte-garniture (8), de manière à ce que, dans la position de verrouillage du dispositif (12) de verrouillage, l'extrémité (13d) d'application de l'élément (13) de ressort s'applique au côté (8c) supérieur du porte-garniture (8), la partie (13c) de couplage de l'élément (13) de ressort étant disposée entre le premier organe (15) de couplage et l'élément (14) de fixation et la partie (13c) de couplage de l'élément (13) de ressort s'appliquant, par son côté inférieur, au côté supérieur de l'élément (14) de fixation et l'élément (14) de fixation poussant le côté (8c) supérieur du porte-garniture.

20. Garniture (30, 31) de frein suivant l'une des revendications 11 à 19, **caractérisée en ce que** le dispositif (12) de verrouillage est monté de manière à pouvoir être retiré sur le côté (8c) supérieur du porte-garniture (8), de manière à ce que l'autre organe (16) de couplage soit constitué en forme de U, en ayant des fixations (22) axiales pouvant être retirées, ou/et la liaison de l'autre organe (16) de couplage à la saillie (18) de palier ou à l'extrémité (13b) de palier de l'élément (13) de ressort est constituée sous la forme d'une liaison à clips.

21. Frein (1) à disque, notamment frein à disque à étrier coulissant pour un véhicule, comportant au moins un étrier (3) de frein, un support (4) de frein immobilisé à poste fixe, qui a deux paires de cornes (5, 5'; 6, 6') de support de frein, par lesquelles respectivement une garniture (30, 30') de frein est retenue, ainsi qu'au moins un fixeur (11) de garniture, **caractérisé en ce qu'**au moins une garniture (30, 30') de frein est constituée suivant l'une des revendications précédentes et **en ce qu'**au moins l'une des deux paires de cornes (5, 5'; 6, 6') de support de frein, avec laquelle la au moins une garniture (30, 30') de frein suivant l'une des revendications précédentes est en contact a un évidement (21), qui coopère avec la partie (14c) de verrouillage du dispositif (12) de verrouillage de la au moins une garniture (30, 30') de frein suivant l'une des revendications précédentes.

22. Frein (1) à disque suivant la revendication 21, **caractérisé en ce que** l'évidement (21) est constitué de type à contre-dépouille.

23. Frein (1) à disque suivant la revendication 21 ou 22, **caractérisé en ce que** le dispositif (12) de verrouillage de la au moins une garniture (30, 30') de frein passe d'une position déverrouillée, dans laquelle une partie (14c) de verrouillage de l'élément (14) de fixation est reçue dans un évidement (8c) du porte-garniture (8), à une position de verrouillage, dans laquelle la partie (14c) de verrouillage de l'élément (14) de fixation du porte-garniture (8) est en prise pour coopérer avec l'évidement (21) de la corne (5, 5'; 6, 6') de support de frein associée, lorsque le fixeur (11) de garniture est monté.

24. Frein (1) à disque suivant la revendication 21, **caractérisé en ce que** le fixeur (11) de garniture fait passer le dispositif (12) de verrouillage de la au moins une garniture (30, 30') de frein automatiquement de la position déverrouillée à la position de verrouillage, lorsqu'il est monté.

25. Frein (1) à disque suivant la revendication 23 ou 24, **caractérisé en ce qu'**il est prévu au moins une pièce distincte d'actionnement pour faire passer le dispositif (12) de verrouillage de la au moins une garniture (30, 30') de frein de la position déverrouillée à la position de verrouillage.
